(19)

**Europäisches Patentamt**

**European Patent Office**

**Office européen des brevets**

(11) **EP 4 675 272 A2**

(12) **EUROPEAN PATENT APPLICATION**

(43) Date of publication:
07.01.2026 Bulletin 2026/02

(21) Application number: 25218273.8

(22) Date of filing: 22.12.2022

(51) International Patent Classification (IPC):
*G01N 29/44* ^(2006.01)

(52) Cooperative Patent Classification (CPC):
**G01N 29/043; G01N 29/326; G01N 29/4418;**
G01N 2291/267

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: 22.12.2021 GB 202118792
22.12.2021 GB 202118803
14.04.2022 GB 202205563
05.09.2022 GB 202212945

(62) Document number(s) of the earlier application(s) in
accordance with Art. 76 EPC:
**22839433.4 / 4 453 556**

(71) Applicant: **Cavendish Nuclear Limited
Warrington WA3 6YD (GB)**

(72) Inventors:
• **VITHANAGE, Randika**
**Glasgow, GR1 1RX (GB)**
• **MACLEOD, Charles**
**Glasgow, GR1 1RX (GB)**
• **LINES, David**
**Glasgow, G1 1RX (GB)**
• **SMART, Matt**
**Rotherham, S60 5WG (GB)**
• **SMART, Paul**
**Rotherham, S60 5WG (GB)**
• **SWAIN, Ryan**
**Rotherham, S60 5WG (GB)**
• **ROOKER, Tim**
**Rotherham, S60 5WG (GB)**
• **BALAKRISHNAN, Jeyaganesh**
**Rotherham, S60 5WG (GB)**
• **LIU, Xuanang**
**Rotherham, S60 5WG (GB)**

(74) Representative: **Murgitroyd & Company
165-169 Scotland Street
Glasgow G5 8PL (GB)**

Remarks:
This application was filed on 25-11-2025 as a
divisional application to the application mentioned
under INID code 62.

(54) **IMPROVEMENTS IN AND RELATING TO ULTRASOUND PROBES**

(57) A method and apparatus for providing an inspection of a weld are disclosed wherein the method comprises: providing weld inspection apparatus in proximity with a weld on a substrate to be inspected; conducting the inspection, wherein the substrate is provided at an elevated temperature state above ambient temperature by heating during the inspection, the conducting of the inspection including: emitting an ultrasound wave into a volume of the substrate and weld; receiving at least a part of the ultrasound wave back from the substrate and weld, thereby acquiring multiple signal sets; then processing one or more of the multiple signal sets to provide weld inspection data; wherein the processing includes a correction for temperature distribution within the volume of the substrate and/or the weld, at the elevated temperature.

EP 4 675 272 A2

**Description**

This disclosure concerns improvements in and relating to ultrasound probes, processing and compensation of signals thereof and methods of use thereof, in non-destructive ultrasound testing, particularly but not exclusively in relation to high temperature deployments thereof.

Ultrasonic testing is used for the non-destructive testing of a wide variety of objects. A transmitting transducer emits ultrasound waves which enter the object, interact with the object and sub-features thereof, and then return to a receiving transducer. The temperature of the object has an impact upon the speed of sound within the object and hence can negatively impact upon the quality of the testing and imaging.

When testing welds, after completion of the weld or after each individual weld pass, it is desirable to be able to conduct the ultrasound test soon after the weld or weld pass has been formed, so as to minimise the time take to perform, test and then make any corrections needed to the weld or weld pass. However, this means that the ultrasound test is conducted whilst the object or substrate is at elevated temperatures and with temperature variations between parts of that object or substrate.

Amongst the potential aims of the disclosure is to provide an ultrasound probe and processing of its signals to account for the impact of temperature and temperature variation with location within the substrate. Amongst the potential aims of the disclosure is to provide accurate imaging under a wide range of temperatures and account for different temperatures at different locations, particularly in high temperature contexts.

According to a first aspect of the disclosure there is provided a method of providing an inspection of a weld, the method comprising:

   a) providing weld inspection apparatus in proximity with a weld on a substrate to be inspected;
   b) conducting the inspection, wherein the substrate is provided at an elevated temperature state above ambient temperature by heating during the inspection, the conducting of the inspection including:

      a. emitting an ultrasound wave into a volume of the substrate and weld;
      b. receiving at least a part of the ultrasound wave back from the substrate and weld, thereby acquiring multiple signal sets;

   c) processing one or more of the multiple signal sets to provide weld inspection data;

wherein the processing includes a correction for temperature within the volume of the substrate and/or the weld, at the elevated temperature.

The method may include an elevated temperature which is consistent through the substrate and/or an elevated temperature which includes a temperature distribution, such as a temperature gradient, in the substrate and/or weld and/or weld inspection apparatus.

The processing includes a correction for temperature distribution, for instance temperature gradient, within the volume of the substrate and/or the weld, at the elevated temperature.

The method may provide that the correction includes, the path of at least a part of the ultrasound wave through weld inspection apparatus and/or the volume of the substrate and/or weld being corrected to give a corrected path.

The method may provide that the part of the ultrasound wave has path characteristics in one or more elements that the path passes through. The method may provide that the part of the ultrasound wave in the weld inspection apparatus has path characteristics in one or more media elements. The method may provide that the part of the ultrasound wave in the substrate has path characteristics in one or more substrate elements. The method may provide that the part of the ultrasound wave in the weld has path characteristics in one or more weld elements. The method may provide that the part of the ultrasound wave in the interface between the weld inspection apparatus and the substrate has path characteristics in one or more interface elements.

The ultrasound wave may have path characteristics in each of a plurality of elements, for instance each element adjoining a predecessor element and a successor element. The ultrasound wave may have path characteristics in each of one or more media elements. The ultrasound wave may have path characteristics in each of one or more interface elements. The ultrasound wave may have path characteristics in each of one or more substrate elements. The ultrasound wave may have path characteristics in each of one or more weld elements.

The ultrasound wave may have path characteristics in each of one or more media elements, followed by path characteristics in each of one or more substrate elements. The ultrasound wave may have path characteristics in each of one or more interface elements, for instance after the media elements and/or before the substrate elements. The ultrasound wave may have path characteristics in each of one or more weld elements, for instance after the substrate elements.

The ultrasound wave may further, for instance in a return path, have path characteristics in each of one or more substrate elements, followed by path characteristics in each of one or more media elements. The ultrasound wave may have path characteristics in each of one or more weld elements, for instance before the substrate elements. The ultrasound wave may have path characteristics in each of one or more interface elements, for instance after the substrate elements and/or before the media elements.

The method may provide that the part of the ultrasound wave has path characteristics in the weld inspection apparatus element, for instance in a media element, and/or has path characteristics in the interface, for instance in an interface element, before the part of the ultrasound wave enters a first element of the substrate, for instance a first substrate element. The method may provide that the first element has a temperature within the temperature distribution, such as temperature gradient, for the volume of the substrate and/or weld, with temperature-corrected path characteristics being determined for the part of the ultrasound wave in the first element, the temperature-corrected path characteristics being based upon the change in temperature between the weld inspection apparatus element, for instance a media element and/or an interface element, and the first element of the substrate, for instance a first substrate element.

The change in the path characteristics may be calculated according to Snell's Law of Refraction.

The method may provide that the part of the ultrasound wave has path characteristics in a first element of the substrate, for instance a first substrate element, before the part of the ultrasound wave enters a second element of the substrate, for instance a second substrate element. The method may further provide that the first element has a temperature within the temperature distribution, such as temperature gradient, for the volume of the substrate and/or weld, the second element has a temperature within the temperature distribution, such as temperature gradient, for the volume of the substrate and/or weld, with the temperature-corrected path characteristics being determined for the part of the ultrasound wave in the second element, for instance second substrate element, the temperature-corrected path characteristics being based upon the change in temperature between the first element and the second element, such as between the first substrate element and the second substrate element.

The method may provide that the part of the ultrasound wave has path characteristics in a first further element of the substrate, for instance a first further substrate element, before the part of the ultrasound wave enters a second further element of the substrate, for instance a second further substrate element. The method may further provide that the first further element has a temperature within the temperature distribution, such as temperature gradient, for the volume of the substrate and/or weld, the second further element has a temperature within the temperature distribution, such as temperature gradient, for the volume of the substrate and/or weld, with the temperature-corrected path characteristics being determined for the part of the ultrasound wave in the second further element, for instance second further substrate element, the temperature-corrected path characteristics being based upon the change in temperature between the first further element and the second further element, such as between the first further substrate element and the second further substrate element.

The method may provide that the temperature-corrected path characteristics are determined for each element that the part of the ultrasound wave passes through in weld inspection apparatus and/or the substrate and/or the weld, for instance for each element passed through in the weld inspection apparatus and/or substrate and/or weld.

The method may provide that the change in temperature is expressed as a change in the speed of sound between the speed of sound in one element and the speed of sound in the next element.

The method may provide that a plurality of different parts of the ultrasound wave in the weld inspection apparatus and/or in the volume of the substrate and/or in the weld are corrected to give a corrected path, for instance all of the way through the weld inspection apparatus and/or substrate and/or weld.

The method may provide for a plurality of corrected paths, for instance all of the way through the weld inspection apparatus and/or substrate and/or weld and/or back again. The method may provide at least 5 corrected paths, possibly at least 15 corrected paths, potentially at least 25 corrected paths and optionally at least 40 corrected paths, such as 64 corrected paths.

A corrected path may be provided for the path of each beam of ultrasound emitted by the transducer, for instance a 64-element phased array.

The method may provide that a region of interest is selected, the region of interest being within the volume of the substrate and weld that the ultrasound wave has passed through, the region of interest being sub-divided into locations, such as pixels. The method may apply a signal correction for a location, such as a pixel. The method may apply a signal correction for each location, such as each pixel, in the region of interest. the beam path to the location, such as a pixel, and/or to the return beam path.

The method may provide that the signal correction is determined according to a relationship between a location, such as a pixel, and at least one, preferably at least a pair, of the corrected paths. The relationship may be a geometric relationship. The relationship may be a weighted correction based upon the relative geometric position to the one or more corrected paths.

The method may provide that the signal correction is determined according to a relationship between a location, such as a pixel, and at least one, preferably at least a pair, of positions on at least one, preferably at least a pair, of the corrected paths. The relationship may be a geometric relationship. The relationship may be a weighted correction based upon the relative geometric position, such as distance, between the location and at least one, preferably at least a pair, of positions on at least one, preferably at least a pair, of the corrected paths.

The method may include a signal correction for one or more locations, such as pixels, that a corrected path for an emitted ultrasound beam passes through. The signal correction may be predominantly or exclusively based upon the corrected path for the emitted ultrasound beam that passes through the location, such as pixel. The signal correction may be based upon a relationship which is a weighted correction based upon the relative geometric position, such as distance, between the location and at least one, preferably at least a pair, of positions on at least one, preferably at least a pair, of the corrected paths, with the signal correction potentially predominantly or exclusively based upon the corrected path for the emitted ultrasound beam that passes through the location, such as pixel.

The method may include a signal correction for one or more locations, such as pixels, that a corrected path for an emitted ultrasound beam does not pass through. The method may include a signal correction for a location, such as a pixel, that a corrected path for an emitted beam does not pass through, based upon the calculated or observed correction for a location that a corrected path for an emitted beam does pass through. The signal correction may be based upon the calculated or observed position for a plurality, for instance four, locations that an emitted beam has passed through.

The signal correction may be based upon the calculated or observed position for a plurality of locations on a first emitted beam and a plurality of locations on a second emitted beam. The first and second emitted beams may be adjacent beams in a set of beams. The first beam may be to one side of the location requiring signal correction and the second beam may be to the other side of the location requiring signal correction.

The signal correction for a location may be a weighted combination of the signal correction for one or more other locations, for instance one or more other locations that an emitted beam has passed through. The weighted combination may be based upon four locations. The weighted combination may be based upon two locations on one beam and two locations on another beam.

The signal correction for a location may be weighted according to the fraction of the distance, between a location on the first beam and a location on the second beam, that the location occurs at. The signal correction for a location may be weighted according to a ratio of the distance that location is from a location on the first beam and the distance that location is from a location of the second beam, for instance weighting the corrections from those locations. The distance may be considered along an arc an equal distance from the transducer that passes through the first beam, the location to be corrected and the second beam.

The signal correction for a location may be weighted according to the fraction of the distance, between a first location on the first beam and a second location on the first beam, that the location occurs at. The signal correction for a location may be weighted according to a ratio of the distance that location is from a first location on the first beam and the distance that location is from a second location of the first beam, for instance weighting the corrections from those locations. The distance may be considered along the first beam.

The distance values for each location, such as a pixel, in the region of interest or even in the substrate, may be pre-calculated and stored.

The acoustic velocity in each location, such as pixel, in the region of interest or even the substrate, may be calculated.

The beam path through each boundary between locations, such as pixels, in the region of interest or even the substrate, may be calculated, for instance according to Snell's Law of Refraction.

The temperature may be mapped for each location, such as pixel, in the region of interest or even the substrate. The region of interest or even the substrate may be allocated temperature contours, for instance perpendicular to a surface of the substrate.

The method may include determining the transit time though each location, for instance, determined by the distance and velocity in the zone. The method may establish the net transit time as the sum of the transit times through all the locations on a path.

The method may provide that the results set includes one or more measured indications of geometry of the substrate and/or weld groove and/or weld, wherein the method further includes a comparison of the measured indications of geometry with a modelled indications of geometry, wherein **if** the comparing of the measured indications of geometry with the modelled indications of geometry establishes that the measured indications of geometry is a sufficient **fit** for the modelled indications of geometry, accepting the imaging of the region of interest.

The method may provide that the results set includes one or more measured indications of geometry of the substrate and/or weld groove and/or weld, wherein the method further includes a comparison of the measured indications of geometry with a modelled indications of geometry, wherein if the comparing of the measured indications of geometry with the modelled indications of geometry establishes that the measured indications of geometry is an insufficient fit for the modelled indications of geometry, the temperature distribution used in the correction for temperature distribution within the volume of the substrate and/or the weld, at the elevated temperature is predetermined.

The method may provide that the method includes providing a thermal model and generating, using the thermal model, a modelled temperature distribution position for at least a part of the substrate, with the elevated temperature state, the part of the substrate including the volume. The method may provide that the method includes measuring the temperature at a plurality of locations, with the substrate at the elevated temperature, to obtain a measured temperature distribution position, the method further including comparing the measured temperature distribution position with the modelled temperature distribution position.

The method may provide that the method further includes, if the comparing of the measured temperature distribution position with the modelled temperature distribution position establishes that the modelled temperature distribution is an insufficient fit for the measured temperature distribution, revising the thermal model and/or the modelled temperature distribution position and then re-comparing.

The method may provide that the method further includes, if the comparing of the measured temperature distribution position with the modelled temperature distribution position establishes that the modelled temperature distribution is a sufficient fit for the measured temperature distribution, calculating a characteristic of the emitted ultrasound during transit of at least a part of the substrate and/or weld.

The first aspect of the disclosure may include any of the features or possibilities or options set out elsewhere in the document, including in the other aspects of the disclosure.

According to a second aspect of the disclosure there is provided apparatus for providing an inspection of a weld, the apparatus comprising:

a) weld inspection apparatus, in use provided in proximity with a weld on a substrate to be inspected, wherein the substrate is provided at an elevated temperature state above ambient temperature by heating during the inspection;

b) the weld inspection apparatus being adapted to:

1) emitting an ultrasound wave into a volume of the substrate and weld;
2) receiving at least a part of the ultrasound wave back from the substrate and weld, thereby acquiring multiple signal sets;
3) the weld inspection apparatus include one or more processors, including a processor with inputs for one or more of the multiple signal sets, the processor providing a correction to the inputted one or more of the multiple signal sets to provide corrected weld inspection data, wherein the processor applies a correction for temperature within the volume of the substrate and/or the weld, at the elevated temperature.

The second aspect of the disclosure may include any of the features or possibilities or options set out elsewhere in the document, including in the other aspects of the disclosure.

According to a third aspect of the disclosure, a method of determining one or more dimensions of one or more substrates to be welded, the method comprising:

i. providing dimension determining apparatus that emit ultrasound;
ii. introducing one of more substrates to be welded to the dimension determining apparatus;
iii. conducting one or more dimension determinations on one or more of the substrates using ultrasound;
iv. using the one or more dimension determinations in one or more further actions conducted on the one or more substrates.

The method may be part of a method of welding and may include a step of providing welding apparatus. The method may be an arc welding method. The method may include introducing one or more substrates to be welded to the welding apparatus. The one or more further actions may be a part of a welding process and/or may be part of a post-welding process.

The ultrasound may be provided by one or more beams emitted from the apparatus into the one or more substrates. The ultrasound may be provided by a plurality of beams. The ultrasound may be provided by a plurality of beams spread in an arc. The arc may extend over at least 5°, potentially at least 10o and possibly at least 15°. The arc may extend over less than 40°, for instance less than 30° or potentially less than 25°.

The one or more dimensions of the one or more substrates may be a separation between a first surface and a second surface, such as a thickness. The thickness may be established in the direction of one or more beams of the ultrasound. The thickness may be established perpendicular to one or more surfaces of the one or more substrates.

The dimension determining apparatus may also be weld inspection apparatus. The dimension determining apparatus and/or weld inspection apparatus may use ultrasound.

The method may include a step of elevating the temperature of the one or more substrates above ambient temperature using heating.

The step of elevating the temperature of the one or more substrates above ambient temperature using heating may be provided prior to conducting one or more dimension determinations on one or more of the substrates. The step of elevating the temperature of the one or more substrates above ambient temperature using heating may be provided after conducting one or more dimension determinations on one or more of the substrates.

The method may include conducting one or more dimension determinations on one or more of the substrates at a plurality of locations on the substrate. The method may include moving, for instance rolling, the dimension determining apparatus over the substrate between the plurality of locations. The plurality of locations on the substrate may follow the intended track for a weld and/or the formed track of a weld.

The one or more dimensions may be measured at an angle relative to the substrate. The angle relative to the substrate may be considered as an angle relative to a first surface and/or a second surface of the substrate. The angle may be 90° +/- 25°, for instance 90° +/- 20°, potentially 90° +/-15°.

The one or more dimensions may be measured at a range of angles relative to the substrate. The range of angles relative to the substrate may be considered as a range of angles relative to a first surface and/or a second surface of the substrate. The range of angles may be 90° +/- up to 25°, for instance 90° +/- up to 20°, potentially 90° +/- up to 15°, particularly 90° +/- up to 10°.

The one or more dimensions may be measured perpendicular to one or more of a first surface and/or a second surface of a substrate.

The method may include correction of the thickness measurement for the effect of temperature and/or temperature gradients within the substrate on the ultrasound, for instance on each of the ultrasound beam paths.

The method may include correction of the thickness measurement for the effect of refraction of the ultrasound, for instance on each of the ultrasound beam paths.

The method may include providing a weld inspection apparatus.

The method may include inspecting the weld generated using the weld inspection apparatus. The method may include that the inspecting of the weld is provided by the inspection apparatus at an inspection location on the one or more substrates, with the inspection location at an elevated temperature above ambient.

The one or more dimensions may include the dimensions of the substrate along one or more paths through the substrate which are to be and/or are being inspected by weld inspecting apparatus.

The combined dimension determining apparatus and weld inspection apparatus may conduct the dimension determinations for the substrate and then afterwards conduct the one or more weld inspections. The combined dimension determining apparatus and weld inspection apparatus may conduct one or more dimension determinations and then one or more weld inspections and then further dimension determinations, potentially followed by further weld inspections. A cyclic approach of dimension determination, weld inspection, dimension determination and weld determination may be employed.

The method may include using the one or more dimension determinations in one or more further actions conducted on the one or more substrates, by using one or more of the dimension determinations in an adjustment and/or correction of a weld inspection. The method may include an adjustment in the focal depth. The method may include an adjustment in the image analysis region, for instance the image analysis region considered to be inspected. The method may include using the one or more dimension determinations in an adjustment and/or correction of a position determined by a weld inspection. The method may include using the one or more dimension determinations in an adjustment and/or correction of a depth into the substrate determined by a weld inspection.

The third aspect of the disclosure may include any of the features or possibilities or options set out elsewhere in the document, including in the other aspects of the disclosure.

According to a fourth aspect of the disclosure there is provided apparatus for dimension determination, optionally in welding, the apparatus comprising:

    i. optional welding apparatus;
    ii. dimension determining apparatus;

wherein an element of the dimension determining apparatus includes an ultrasound emitter and receiver, the element of the dimension determining apparatus is provided with a substrate contact surface and the element of the dimension determining apparatus provides output data signals to another element of the dimension determining apparatus, wherein the another element of the dimension determining apparatus includes a determinator for determining one or more dimensions of the substrate, and wherein the determinator provides the one or more dimensions to another processor, the another processor using the one or more dimensions in one or more further actions conducted in relation to the one or more substrates.

The apparatus may further include weld inspection apparatus. The apparatus may include a combined dimension determining apparatus and weld inspection apparatus.

The determinator and the another processor may be part of the common data processing components of the combined dimension determining apparatus and weld inspection apparatus.

The fourth aspect of the disclosure may include any of the features or possibilities or options set out elsewhere in the document, including in the other aspects of the disclosure.

According to a fifth aspect of the invention there is provided, a method of inspecting a weld, the method comprising:

a) providing weld inspection apparatus in proximity with a weld on a substrate to be inspected;
b) emitting ultrasound into the substrate and weld and receiving ultrasound back from the substrate and weld, thereby acquiring multiple signal sets, including a first signal set and a second signal;
c) processing at least the first signal set and the second signal set to provide weld inspection data; wherein

the first signal set comprises a first series of first data elements, the first series of data elements spanning a first time period, each first data element including a first variable value for a variable and a first time value for that first variable value, the first time period including a first time sub-period;
the second signal set comprises a second series of second data elements, the second series of second data elements spanning a second time period, each second data element including a second variable value for the variable and a second time value for that second variable value, the second time period including a second time sub-period;
the first time sub-period and the second time sub-period cover the same time values;
the processing of the first signal set and the second signal set determining a modified signal set which contributes to the weld inspection data, wherein the modified signal set: includes a modified time sub-period covering the same time values as the first time sub-period and the second time sub-period; includes, for a time value, an expression of the first variable value for that time value and an expression of the second variable value for that time value, if the first variable value and the second variable value are within a given relationship to one another; and/or includes, for a time value, one of an expression of the first variable value for that time value or an expression of the second variable value for that time value, if the first variable value and the second variable value are not within a given relationship to one another.

The first variable value may be an expression of amplitude, for instance at a given time value, particularly the amplitude of the rectified signal set.

The second variable value may be an expression of amplitude, for instance at a given time value, particularly the amplitude of the rectified signal set.

The first time period, second time period and/or one or more further time periods may be the same duration. The first time period, second time period and/or one or more further time periods may be the same duration +/- 25%. The first time period, second time period and one or more further time periods may be the duration of the receiver signal for an ultrasound beam or wave.

The first time sub-period and/or the second time sub-period and/or one or more further sub-time periods may be individual time values. The first time sub-period and/or the second time sub-period and/or one or more further sub-time periods may be small sets of individual time values.

The first time period may be considered as multiple different or partially overlapping first time sub-periods. The second time period may be considered as multiple different or partially overlapping second time sub-periods. The further time period may be considered as multiple different or partially overlapping further time sub-periods. The multiple time sub-periods may be paired with one another when they are for the same time values.

The modified signal set may be complied from the consideration of a number of time sub-periods according to the method.

The method may provide that, in the modified signal set, the expression of the first variable value for that time value and the expression of the second variable value for that time value may be an average of the first variable value and the second variable value. The method may provide that, in the modified signal set, the expression of the first variable value for that time value and/or the expression of the second variable value for that time value, together with a further variable value may be an average of all the variable values within a given relationship.

The method may provide that the first variable value and the second variable value are within a given relationship to one another, if the first variable value and the second variable value are within a given threshold. The nature and/or defining function and/or value of the given threshold may be variable. The threshold may vary, particularly increase, where system gain increases and/or where noise increases in the signal sets. The threshold may vary, particularly increase, where interference levels increase in the signal sets. The nature and/or defining function and/or value of the threshold may be determined in a calibration method.

The method may provide that the first variable value and the second variable value are not within a given relationship to one another, if the first variable value and the second variable value are outside a further given threshold, potentially the same threshold. The nature and/or defining function and/or value of the given threshold may be variable. The further given threshold may vary, particularly increase, where system gain increases and/or where noise increases in the signal sets. The further given threshold may vary, particularly increase, where interference levels increase in the signal sets.

The method may further provide that where the first variable value and the second variable value are not within a given relationship to one another, that the included one expression, chosen from the first and the second, be the expression with the lower variable value for that time value. The method may further provide that where a variable value and the compared variable value are not within a given relationship to one another, that the included one expression be the expression with the lower variable value for that time value. The lower variable value may be the lower variable value considered absolute terms.

The given threshold may be determined relative to an amplitude for the first and second variable value.

The amplitude may be a pre-determined amplitude value. The amplitude may be an anticipated amplitude value, for instance relative to an anticipated noise amplitude. The amplitude may be a defined proportion or multiple of the anticipated noise amplitude.

The amplitude may be an observed amplitude.

The amplitude may relate to the maximum amplitude observed in a set of variable values deemed free of interference.

The amplitude may relate to the minimum value observed for a time or time period across all of the sets of variable values being considered, for instance across the first variable values, second variable values and one or more further variable values. The amplitude may be the minimum plus a factor. This amplitude may be deemed an interference free threshold.

The threshold may be a difference between an observed value and an analysis value. The observed value and the analysis values may be amplitudes. The analysis value may be obtained from the minimum value observed for a time or time period across all of the sets of variable values being considered, for instance across the first variable values, second variable values and one or more further variable values. The analysis value may be the minimum plus a factor.

The method may further include acquiring one or more further signal sets as part of the multiple signal sets.

The method may further include processing one or more of the further signal sets to provide weld inspection data.

The method may further include one or more or all of the further signal sets comprising a further series of further data elements, each further series of further data elements may span a further time period, each further data element including a further variable value for the variable and a further time value for that further variable value, each further time period including a further time sub-period.

The method may further include, one of the further time sub-periods covering the same time values as at least one of the first time sub-period and/or the second time sub-period.

The method may further include the processing of one or more or all of the further signal sets determining a modified signal set which contributes to the weld inspection data.

The method may further include the modified signal set spanning a modified time sub-period covering the same time values as a further time sub period and one or both of the first time subperiod and the second time sub-period.

The method may further include the modified signal set including, for a time value, an expression of the first variable value for that time value and an expression of the second variable value for that time value and an expression of one of the further variable values for that time value, if the first variable value and the second variable value and the further variable value are within a given relationship to one another.

The method may, alternatively or additionally include the modified signal set including, for a time value, one of an expression of the first variable value for that time value or an expression of the second variable value for that time value or an expression of the further variable value, if the first variable value and the second variable value and third variable value are not within a given relationship to one another.

The method may, alternatively or additionally, may further include the modified signal set including, for a time value, two of: an expression of the first variable value for that time value; an expression of the second variable value for that time value; an expression of one of the further variable values for that time value; for the two variable values that are within a given relationship to one another.

The method may, alternatively or additionally, may further include the modified signal set including, for a time value, only one of the: an expression of the first variable value for that time value; an expression of the second variable value for that time value; an expression of one of the further variable values for that time value; where the variable values are not within a given relationship to one another.

The method may further provide that the modified signal set is compiled from multiple modified time sub-periods, each covering the same time values as a first time sub-period and/or second time sub-period and/or one or more further time sub-periods.

The fifth aspect of the invention may include any of the features or options or possibilities set out elsewhere in this document, including in other aspects of the disclosure.

According to a sixth aspect of the invention there is provided, apparatus for inspecting a weld, the apparatus comprising:

a) weld inspection apparatus, the welding inspection apparatus including:

a. an emitter of ultrasound, into a substrate and a weld in use, and a receiver for ultrasound, returning from the substrate and weld in use, the receiver being connected to a processor to provide the acquiring multiple signal sets, including a first signal set and a second signal, to a processor;

b. the processor adapted to receive the acquired multiple signal sets, including the first signal set and the second signal set; wherein the first signal set comprises a first series of first data elements, the first series of data

elements spanning a first time period, each first data element including a first variable value for a variable and a first time value for that first variable value, the first time period including a first time sub-period; the second signal set comprising a second series of second data elements, the second series

of second data elements spanning a second time period, each second data element including a second variable value for the variable and a second time value for that second variable value,

the second time period including a second time sub-period; the first time sub-period and the second time sub-period cover the same time values; wherein the processor is adapted, using the first signal set and the second signal set, to

determine a modified signal set which contributes to the weld inspection data, wherein the processor is adapted to provide that the modified signal set, for a modified time sub-period covering the same time values as the first time sub-period and the second time sub-period, includes: for a time value, an expression of the first variable value for that time value and an expression of the second variable value for that time value, if the first variable value and the second variable value are within a given relationship to one another; and/or for a time value, one of an expression of the first variable value for that time value or an expression of the second variable value for that time value, if the first variable value and the second variable value are not within a given relationship to one another.

The sixth aspect of the invention may include any of the features or options or possibilities set out elsewhere in this document, including in other aspects of the disclosure.

According to a seventh aspect of the disclosure there is provided a method of welding, the method of welding comprising:

a) providing welding apparatus;

b) providing a plurality of sensor types;

c) defining a first set of welding conditions for the welding method;

d) introducing one of more substrates to be welded to the welding apparatus;

e) conducting welding of the one or more substrates;

f) obtaining data from the plurality of sensor types during welding;

g) providing a correlation between the data obtained from at least two elected sensor types in the plurality of sensor types;

h) synchronising one or more data points in the data obtained from one of the at least two elected sensor types with one or more data points in the data obtained from another of the at least two elected sensor types;

i) comparing the obtained data from the plurality of sensor types with reference data for one or more of the sensor types;

j) based upon one or more such comparisons, determining whether the welding is of acceptable quality or unacceptable quality;

k) where, if the welding is of unacceptable quality, the method includes then taking one or more actions.

The seventh aspect of the disclosure may include any of the features or possibilities or options set out in the first and/or second aspect of the disclosure relating to the inspection of a weld.

The method may be arc welding.

The method may provide that the correlation is both a temporal correlation and a positional correlation.

The method may provide that the correlation is a temporal correlation.

The method may provide that the data from the at least two elected sensor types include a time of occurrence for one or more data points within the data. The method may further provide that the correlation is a matching time of occurrence for data points in the data from the at least two elected sensor types.

The method may provide that the data from the at least two elected sensor types include a plurality of times at which a temporal correlation is provided.

The method may provide that the data from the at least two elected sensor types include a time of occurrence for all of the data points within the data. The method may provide that the data from the at least two elected sensor types include a time of occurrence for all of the data points within each range, such as a bandwidth, that the data is sub-divided into.

The method may provide that the time of occurrence is obtained relative to a timestamp introduced into the data from an elected sensor type for each of the two or more elected sensor types providing a correlation. The method may provide that the time of occurrence is obtained directly from a timestamp at that time, for instance as a timestamp is applied at the same time as the time of occurrence. The method may provide that the time of occurrence is obtained by the time elapsed since the timestamp and the time of the data point, for instance where a timestamp occurs and the time of occurrence is calculated from the elapsed time since the timestamp when the time of occurrence is reached.

The timestamp may be applied by a processor, for instance a processor including a clock generator and/or provided with a clock signal.

The method may provide that the correlation is a positional correlation.

The method may provide that the data from the at least two elected sensor types include a plurality of positions at which a positional correlation is provided.

The method may provide that the data from the at least two elected sensor types include a position of occurrence for one or more data points within the data. The method may further provide that the correlation is a matching position of occurrence for data points in the data from the at least two elected sensor types.

The method may provide that the data from the at least two elected sensor types include a position of occurrence for all of the data points within the data. The method may provide that the data from the at least two elected sensor types include a position of occurrence for all of the data points within each range, such as a bandwidth, that the data is subdivided into.

The method may provide that the position of occurrence is obtained relative to a position stamp introduced into the data from an elected sensor type for each of the two or more elected sensor types providing a correlation. The method may provide that the position of occurrence is obtained directly from a position stamp at that position, for instance as a position stamp is applied at the same position as the position of occurrence. The method may provide that the position of occurrence is obtained by the time elapsed since the position stamp and the time of the data point, for instance where a position stamp occurs and the position of occurrence is calculated from the elapsed time since the position stamp when the position of occurrence is reached and/or from the elapsed distance travelled since the position stamp when the position of occurrence is reached.

The positional correlation may be relative to a position relating to the one or more substrates being welded, for instance relative to a position on the one or one or more substrates. A plurality of positional correlations may be provided relative to the one or more substrates at the same time. The position may have a known relationship relative to a location at which welding is conducted, for instance relative to the start of the weld and/or relative to the end of the weld.

The positional correlation may be relative to a position relating to the welding apparatus, for instance relative to a position on the welding apparatus. A plurality of positional correlations may be provided relative to the welding apparatus at the same time. One or more of the positions on the welding apparatus may be proximate to the welding electrode. The position may have a known relationship relative to a location at which welding is conducted, for instance relative to the start of the weld and/or relative to the end of the weld, potentially with the known relationship being the separation of electrode and substrate.

Both a positional correlation relative to a position relating to the one or more substrates being welded, for instance relative to a position on the one or one or more substrates and a positional correlation relative to a position relating to the welding apparatus, for instance relative to a position on the welding apparatus, may be provided.

The position stamp may be applied by a processor. The processor may receive one or more positional signals. The positional signals may be emitted by one or more position sensors and/or position indicators. The position sensor may be a vision-based sensor, for example a camera. The position indicator may be a movement detection-based position indicator, for example an incremental encoder, for instance providing occurrence of movement and/or direction of movement and/or encoder position. The tracking signal-based position indicator may be a radio frequency identification-based system, potentially with one or more radio frequency identification tags on the substrate and/or welding apparatus.

The method may include providing at least one type of correlation between the data obtained from at least three, potentially at least four and possibly at least five elected sensor types in the plurality of sensor types. The same type of correlation may be provided between at least two of the elected sensor types. The same type of correlation may be provided between all of the elected sensor types.

The method may include providing at least two different types of correlation between the data obtained from at least three, potentially at least four and possibly at least five elected sensor types in the plurality of sensor types. The same different types of correlation may be provided between at least two of the elected sensor types. The same different types of correlation may be provided between all of the elected sensor types. The different types may include a temporal correlation and a positional correlation.

The method may include synchronising one or more data points in the data obtained from each of the elected sensor types. The method may include synchronising one or more data points in the data obtained from each of at least two, potentially at least three, possibly at least four, of the elected sensor types using the same correlation or correlations.

The method may include synchronising at least 10% of the data points in the data obtained from at least one of the elected sensor types with at least 10% of the data points in the data obtained from at least another of the elected sensor types.

The method may provide that the method includes at least one of the plurality of sensor types, potentially at least one of the elected sensor types, are selected from: voltage sensors, current sensors, welding arc sound emission sensors, weld topology sensors, weld imaging sensors and ultrasound imaging sensors.

A voltage sensor may be one of the plurality of sensor types. A voltage sensor may be one of the elected sensor types.

A current sensor may be one of the plurality of sensor types. A current sensor may be one of the elected sensor types.

A welding arc sound emission sensor may be one of the plurality of sensor types. A welding arc sound emission sensor may be one of the elected sensor types. The welding arc sound emissions sensor may be an acoustic sensor, such as a microphone. The welding arc sound emissions sensor may be sensitive to emissions coming from the arc forming the weld and/or from the interaction of the arc with the substrate and/or from the interaction of the arc with the shield gas. The welding arc sound emissions sensor may provide data which informs on characteristics relating to welding speed and/or weld location sidewall arcing and/or weld location sidewall fusion and/or shielding gas flow rate.

A weld topology sensor may be one of the plurality of sensor types. A weld topology sensor may be one of the elected sensor types. The weld topology sensor may be a radiation-based sensor. The weld topology sensor may be an image-based sensor. The weld topology sensor may be a laser sensor. The weld topology sensor may be sensitive to radiation applied to and reflected by the substrate and/or weld. The applied radiation and/or reflected radiation may be focused by the weld topology sensor. The weld topology sensor may inform on characteristics relating to the geometry of the substrate and/or weld.

A weld imaging sensor may be one of the plurality of sensor types. A weld imaging sensor may be one of the elected sensor types. The weld imaging sensor may be a camera-based sensor. The weld imaging sensor may provide data that informs on characteristics relating to weld pool size and/or weld pool geometry and/or weld pool temperature and/or the presence of deposited material on the weld and/or substrate and/or the patterns of deposited material on the weld and/or substrate and/or shape of deposited material on the weld and/or substrate and/or presence of anomalies on the weld and/or substrate.

An ultrasound imaging sensor may be one of the plurality of sensor types. An ultrasound imaging sensor may be one of the elected sensor types.

One or more or all of the sensor types may provide raw data sets. The method may include processing of the raw data sets to give processed data sets.

A determination for an individual sensor type may consider the raw data and/or processed data. A determination for an individual sensor type may consider the distance that a data point is from a known set of data points, for instance a known set of data points indicative of acceptable welding. The known set of data points may be represented by a single element, for instance the mean of the known set of data points.

The known set of data points may be represented by a Principal Component Analysis, PCA, model for the sensor type and its signal values and/or data values.

The distance may be a Mahalanbis distance.

The distance may be expressed as an outlier score.

The determination may be based upon the distance of the data point relative to a threshold value, for instance a threshold distance. The determination may be based upon whether the data point is within or outside a boundary for the known set of data points.

The determination may be made using a Mahalanbis distance novelty detection model by comparing the data points or signal values to a previously developed Principal Component Analysis, PCA, model for the sensor type and its signal values and/or data values.

The processing of the raw data sets may include applying a noise cancelling algorithm. The raw data sets may be processed to divide them into a series of bandwidths.

The determination may use a model, for instance a PCA model of acceptable performance, to make the determination on subsequent data points and/or signals.

The model and/or the mean of the model may be recalculated as data points and/or data sets determined to be acceptable welding and/or determined to be unacceptable welding are added.

One or more or all of the sensor types may provide raw data sets, with the method including processing of the raw data sets to give processed data sets, the processing making use of a model. The method may include the use of different variants of the model for different parts of the welding process. In particular, a variant of the model may be used for one or more welding passes and a different model may be used for one or more further welding passes within the overall weld generating process. A different variant of the model may be used for each weld pass in the overall weld generating process. One or more further different variants may be used for remedial welding within the weld generating process, for instance where a part of the weld is removed and then rewelded. A separate further different variant of the model may be used for each weld pass or weld bead in the overall welding process that is being subjected to remedial welding.

The model may be an acoustic signal processing model. The model may be a voltage and/or current and/or power, such as output power, processing model.

The model may be comprised of multiple different data sources or sub-models.

The method may provide that the synchronising provides an overall data structure in which data points from the at least two elected sensor types are aligned in time and/or position with one another.

The method may provide that the data points from the at least two elected sensor types are displayed to a user, with the data points align with respect to time of occurrence and/or position of occurrence.

The method may provide that the data from two or more of the elected sensor types and the correlated data from the at least two sensor types are displayed to a user and/or stored.

The method may provide that the determination as to whether the welding is of acceptable quality or unacceptable quality and/or wherein the one or more actions taken are displayed and/or stored.

The method may provide that the method includes providing a correlation between the data obtained from at least four elected sensor types in the plurality of sensor types.

The method may include inspection of the whole weld. The method may include the inspection of a multi-pass weld, for instance before all of the passes have been completed, such as after each pass and before the next pass.

The welding apparatus may be mounted on any autonomous automated deployment system. The welding apparatus may be mounted on a guided rail system or column and boom system. The welding apparatus may be mounted on a robotic arm, for instance a multi-axis arm. The welding apparatus may be an arc welder.

The weld inspection apparatus may be one of the plurality of sensor types. The weld inspection apparatus may be one of the elected sensor types. The weld inspection apparatus may use ultrasound, for instance phased array ultrasound.

The weld inspection apparatus may be mounted on any autonomous automated deployment system. The welding apparatus may be mounted on a guided rail system or column and boom system. The welding apparatus may be mounted on a robotic arm, for instance a multi-axis arm. The weld inspection apparatus may be a phased array ultrasound transducer. The weld inspection apparatus may include an ultrasound emitter and a receiver. The weld inspection apparatus may include a substrate contacting surface. The weld inspection apparatus may be in physical contact with the inspection location. The substrate contacting surface may be in physical contact with the inspection location.

The method may include rolling the weld inspection apparatus, for instance the substrate contact surface thereof, over the surface of the substrate, for instance to one side of, but potentially parallel to the weld.

The weld inspection apparatus may be provided with internal cooling. The method may include the feeding of coolant into the weld inspection apparatus and/or the removal of coolant from the weld inspection apparatus.

The method may further provide that at least one sensor type of the plurality of sensor types, potentially at least one of the elected sensor types, is a part of weld inspection apparatus and the method includes a step of inspecting the weld using the weld inspection apparatus. The method may provide that the method includes a step of inspecting the weld using weld inspection apparatus to determine the absence or presence of a welding defect at a welding location, particularly a continuous series of locations forming the weld. The method may provide that the method includes a step of inspecting the weld using weld inspection apparatus to determine one or more characteristics of a defect at a location. The method may provide that the characteristics include one or more of size, position, defect type, defect shape or defect position relative to the geometry of the weld and/or relative to the length of weld.

The method may include a determination of the absence or presence of a welding defect at a welding location in real-time. The method may include a determination the absence or presence of a welding defect at a welding location within 100 milliseconds, potentially within 50 millisecond and possibly within 20 milliseconds, of the welding apparatus moving away from the location. The method may provide that the method further includes a comparison of one or more of the characteristics with one or more standards, and further includes a determination of whether the weld with the defect at a location meets a weld standard or does not meet the weld standard.

The method may include a determination of whether the weld with the defect at a location meets a weld standard or does not meet the weld standard in real-time. The method may include a determination of whether the weld with the defect at a location meets a weld standard or does not meet the weld standard within 100 milliseconds, potentially within 50 millisecond and possibly within 20 milliseconds, of the welding apparatus moving away from the location.

The method may provide that if the weld meets the weld standard, then a record for the weld is created and stored, potentially with the position of the defect relative to the geometry of the weld and/or relative to the length of weld included. The method may provide that the method further includes that the record includes data from one or more of the plurality of sensor types. The method may provide that if the weld does not meet the weld standard, one or more remedial steps are applied to the weld.

The method may provide that at least one sensor types of the plurality of sensor types, potentially at least one of the elected sensor types, are weld conditions sensors and the method includes a step of inspecting the weld conditions using the weld condition sensors.

The method may provide that the method includes a step of inspecting the weld conditions to determine one or more parameters of the weld as it is formed.

The method may provide that the method includes a comparison of one or more of the parameter with one or more control parameters, and further includes a determination of whether a risk level for weld defects is exceeded.

The method may provide that the method includes the one or more actions being to alter the welding conditions from the first set of welding conditions for the welding method. The method may provide that the method includes the alteration in the welding conditions from the first set of welding conditions is to stop welding and/or alert an operator. The method may provide that the method includes the alteration in the welding conditions from the first set of welding conditions is to change the welding conditions back to the first set of conditions and/or to change the welding conditions to a second set of conditions.

The method of welding may further include: inspection of a weld formed by the method of welding. The method of welding may further comprise:

i. providing weld inspection apparatus;
ii. elevating the temperature of the one or more substrates above ambient temperature using heating;
iii. conducting welding of the one or more substrates at an elevated temperature above ambient temperature using the welding apparatus;
iv. inspecting the weld generated using the weld inspection apparatus;
v. wherein the inspecting of the weld is provided by the inspection apparatus at an inspection location on the one or more substrates, with the inspection location at an elevated temperature above ambient.

The seventh aspect of the disclosure may include any of the features or possibilities or options set out elsewhere in the document, including in the other aspects of the disclosure.

According to an eighth aspect of the disclosure there is provided apparatus for monitoring welding, the apparatus comprising:

a) a plurality of inputs for data from a plurality of sensor types;
b) one or more processors, wherein a processor from amongst the one or more processors:

a. receives the inputs;
b. processes the data obtained from at least two elected sensor types amongst the plurality of senor types to apply a correlation between the data obtained from at least two elected sensor types amongst the plurality of senor types;
c. processes the data obtained from at least two elected sensor types amongst the plurality of senor types using the correlation to synchronise one or more data points in the data obtained from one of the at least two elected sensor types with one or more data points in the data obtained from another of the at least two elected sensor types;

c) one or more outputs for processed data.

A processor may further provide a comparator for receiving and comparing data from one or more of the plurality of sensor types, such as one or more of the elected sensor types, and reference data for one or more of the sensor types.

The comparator may output a determination on whether the welding is of acceptable quality or unacceptable quality based upon the compared data. If the determination is that the welding is of unacceptable quality, the apparatus may further provide a control signal to trigger one or more actions by a control unit.

The apparatus may further comprise a control unit, for instance for receiving a first set of welding conditions for the welding method and/or for receiving a control signal to trigger one or more actions by the control unit, such as a revision to the first set of welding conditions or the termination of welding.

The apparatus may provide that the apparatus includes weld inspection apparatus to determine one or more characteristics of a defect.

The apparatus may provide inputs from at least one of the plurality of sensor types, potentially at least one of the elected sensor types, wherein the sensor types and/or elected sensor types are selected from: voltage sensors, current sensors, welding arc sound emission sensors, weld topology sensors, weld imaging sensors and ultrasound imaging sensors.

A voltage sensor may be one of the plurality of sensor types. A voltage sensor may be one of the elected sensor types.

A current sensor may be one of the plurality of sensor types. A current sensor may be one of the elected sensor types.

A welding arc sound emission sensor may be one of the plurality of sensor types. A welding arc sound emission sensor may be one of the elected sensor types. The welding arc sound emissions sensor may be an acoustic sensor, such as a microphone. The welding arc sound emissions sensor may be sensitive to emissions coming from the arc forming the weld and/or from the interaction of the arc with the substrate and/or from the interaction of the arc with the shield gas. The welding arc sound emissions sensor may provide data which informs on characteristics relating to welding speed and/or weld location sidewall arcing and/or weld location sidewall fusion and/or shielding gas flow rate.

A weld topology sensor may be one of the plurality of sensor types. A weld topology sensor may be one of the elected sensor types. The weld topology sensor may be a radiation-based sensor. The weld topology sensor may be an image-based sensor. The weld topology sensor may be a laser sensor. The weld topology sensor may be sensitive to radiation applied to and reflected by the substrate and/or weld. The applied radiation and/or reflected radiation may be focused by the weld topology sensor. The weld topology sensor may inform on characteristics relating to the geometry of the substrate and/or weld.

A weld imaging sensor may be one of the plurality of sensor types. A weld imaging sensor may be one of the elected sensor types. The weld imaging sensor may be a camera-based sensor. The weld imaging sensor may provide data that informs on characteristics relating to weld pool size and/or weld pool geometry and/or weld pool temperature and/or the presence of deposited material on the weld and/or substrate and/or the patterns of deposited material on the weld and/or substrate and/or shape of deposited material on the weld and/or substrate and/or presence of anomalies on the weld and/or substrate.

An ultrasound imaging sensor may be one of the plurality of sensor types. An ultrasound imaging sensor may be one of the elected sensor types.

The apparatus may provide that the apparatus further provides the comparator includes a first comparator for receiving and comparing one or more of the characteristics with one or more standards, and wherein the first comparator outputs a first determination on whether the weld with the defect meets a weld standard or does not meet the weld standard. The apparatus may provide that the apparatus further provides the comparator includes a second comparator for receiving and comparing one or more of the parameters of the weld as it is formed with one or more control parameters, and wherein the second comparator outputs a second determination on whether a risk level for weld defects is exceeded. The apparatus may provide that if a risk level for weld defects is exceeded that a control signal provided by the apparatus is sent to a controller to trigger one or more actions, and wherein the one or more actions is to alter the welding conditions from the first set of welding conditions for the welding method, for instance, to stop welding and/or alert an operator.

The eighth aspect of the disclosure may include any of the features or possibilities or options set out elsewhere in the document, including in the other aspects of the disclosure.

According to a ninth aspect of the disclosure there is provided a method of welding, the method of welding comprising:

a) providing welding apparatus;
b) providing a plurality of sensor types;
c) defining a first set of welding conditions for the welding method;
d) introducing one of more substrates to be welded to the welding apparatus;
e) conducting welding of the one or more substrates;
f) obtaining data from the plurality of sensor types during welding;
g) comparing the obtained data from the plurality of sensor types with reference data for one or more of the sensor types;
h) based upon one or more such comparisons, determining whether the welding is of acceptable quality or unacceptable quality;
i) wherein, the obtained data is obtained by processing the data from the plurality of sensor types, the obtained data for at least one of the plurality of sensor types being processed using a computer model and wherein the method includes the use of different variants of the model for different parts of the welding process.

In particular, a variant of the model may be used for one or more welding passes and a different model may be used for one or more further welding passes within the overall weld generating process. A different variant of the model may be used for each weld pass in the overall weld generating process. One or more further different variants may be used for remedial welding within the weld generating process, for instance where a part of the weld is removed and then rewelded. A separate further different variant of the model may be used for each weld pass or weld bead in the overall welding process that is being subjected to remedial welding.

The model may be an acoustic signal processing model. The model may be a voltage and/or current and/or power, such as output power, processing model.

The model may be comprised of multiple different data sources or sub-models.

The ninth aspect of the disclosure may include any of the features or possibilities or options set out elsewhere in the document, including in the other aspects of the disclosure.

According to a tenth aspect of the disclosure there is provided apparatus for monitoring welding, the apparatus comprising:

a) a plurality of inputs for data from a plurality of sensor types;

b) one or more processors, wherein a processor from amongst the one or more processors:

    a. receives the inputs from at least one of the plurality of sensor types;

    b. processes the data to provide obtained data for at least one of the plurality of sensor types, the processor having access to a computer model and wherein the method includes the use of different variants of the model for different parts of the welding process;

c) one or more outputs for processed data.

The tenth aspect of the disclosure may include any of the features or possibilities or options set out elsewhere in the document, including in the other aspects of the disclosure.

According to a eleventh aspect of the disclosure there is provided a method of welding, the method of welding comprising:

a) providing welding apparatus;

b) providing a plurality of sensor types;

c) introducing one of more substrates to be welded to the welding apparatus;

d) conducting welding of the one or more substrates;

e) obtaining data from the plurality of sensor types during welding;

f) comparing the obtained data from the plurality of sensor types with reference data for one or more of the sensor types;

g) determining whether the welding is of acceptable quality or unacceptable quality;

h) wherein, the determining includes the consideration of combined data from at least two of the plurality of sensor types.

The method may provide that the combined data is formed and then the determination is made by considering the combined data.

The method may provide for a first determining whether the welding is of acceptable quality or unacceptable quality from the obtained data from one or more of the plurality of sensor types compared with reference data from one or more of the sensor types.

The method may provide that the determining whether the welding is of acceptable quality or unacceptable quality using the combined data is a separate second determining to the first determining. The outcome of the second determining may be given precedence over the first determining in establishing whether the welding is of acceptable quality or unacceptable quality.

The combined data-based determination may include a neural network based step. The combined data-based determination may include a machine learning supported decision engine. The combined data-based determination may include the use of a model.

The combined data may be used in a separate determination of acceptable and/or unacceptable welding to one or more such determinations made using data from only one senor type in each determination.

The combined data-based determination may provide a determination as to acceptable and/or unacceptable welding when a determination made using data from only one senor type in each determination cannot make a determination and/or cannot make a determination with an acceptable level of associated error and/or makes a different determination on acceptable and/or unacceptable welding.

The combined data-based determination may be used for data points and/or series of data which are close to a threshold, close to a threshold distance and/or close to a distance relative to an indication of acceptable and/or unacceptable welding. The combined data-based determination may not be used where the data points and/or a series of data points are far from the threshold, threshold distance or distance.

The combined data may be from one or more sensor types relating to welding conditions applied during the welding. The combined data may be from one or more sensor types relating to welding observations, conducted within less than 1 second of welding, for instance less than 1/10th of a second of welding, at a location. The combined data may not include data from one or more sensor types relating to NDT of the weld and/or relating to welding observations conducted more than 1 minute after the welding at a location.

The neural network may be trained by the provision of labelled data to the neural network. The labelled data may be data points and/or series of data points and an indication of whether they are consistent with acceptable welding and/or unacceptable welding. The labelled data may be data points and/or series of data points and an indication of whether they are consistent with acceptable welding and/or unacceptable welding with respect to a particular characteristic which can give acceptable or unacceptable welding.

The neural network may be trained by the provision of supervised learning. The neutral network may be provided with supervised learning through operator based inputs, such as labels, for instance whether the data point and/or series of data points are indicative of acceptable and/or unacceptable welding.

The training using labelled data and/or supervised learning may be provided during a calibration stage and/or during production welding.

The neural network may be trained from a library of existing data, particularly labelled data. The library may be fed to a neural network classifier.

The labelled data and/or supervised learning and/or library may provide data from multiple sensor types.

The second manner, the library, may be used as the starting labelled data set. The conduct of the first manner, calibration or test runs on the actual welding system with operator calls, can be used as an alternative from the outset. The first manner can be used to add to the second manner data set.

The neural network may revise a definition used in the determination of acceptable and/or unacceptable welding with the passage of time and/or learning.

The neural network may be trained by unsupervised learning. The unsupervised learning may be carried out during a calibration stage.

The neural network may provide clustering or grouping based processing. The neural network may look for patterns in the data, for instance of similarities and/or of anomalies in the data.

The neural network may be trained in a first manner only or may be trained in a first manner and then in a second manner or may be trained in a first manner and a second manner in parallel.

The eleventh aspect of the disclosure may include any of the features or possibilities or options set out elsewhere in the document, including in the other aspects of the disclosure.

According to a twelfth aspect of the disclosure there is provided apparatus for monitoring welding, the apparatus comprising:

a) a plurality of inputs for data from a plurality of sensor types;
b) one or more processors, wherein a processor from amongst the one or more processors:

a. receives the inputs from at least one of the plurality of sensor types;
b. compares the obtained data from the plurality of sensor types with reference data for one or more of the sensor types;
c. determines whether the welding is of acceptable quality or unacceptable quality for an output determination;

the apparatus further comprising:

c) a processor from amongst the one or more processors:

a. forms combined data from the data from two or more of the plurality of sensor types to provide combined data;
b. determines a second determination using the combined data, the second determination being whether the welding is of acceptable quality or unacceptable quality;

d) one or more outputs for the output determination and the output of the second determination.

The twelfth aspect of the disclosure may include any of the features or possibilities or options set out elsewhere in the document, including in the other aspects of the disclosure.

Various embodiments of the disclosure will now be described, by way of example only, and with reference to the accompanying drawings, in which:

Figure 1a is a cross-sectional side view of a probe according to an embodiment useful for implementing the disclosure;
Figure 1b is the same view as Figure 1a, but illustrating further features;
Figure 2a is a schematic illustration of the impact of temperature differentials on ultrasound beams in a substrate;
Figure 2b shows shear wave ultrasound propagation through a substrate with a defect with two different homogenous temperature distributions and with one non-homogenous temperature distribution;
Figure 3a is a plot of the typical non-homogeneous temperature distribution along the weld cross-section, as derived from thermal model and as verified by thermocouple measurements;
Figure 3b is a plot of the ultrasound beams as they propagate through the discrete thermal boundaries, showing the planned focal points and actual geometric location points for a substrate with a non-homogenous temperature distribution;
Figure 4 is a schematic showing the scan-conversion process and how the pixel's value is derived by weighted contributions from the nearest surrounding temporal samples on the nearest beams;

Figure 5 is a schematic of a process flow for a modelling stage, ray tracing stage and imaging stage;

Figure 6 shows a series of cross-sections through a welding groove and the position and sequence of weld passes to be added, together with representative ultrasound derived images of the weld groove in that state;

Figure 7 is an illustration of an approach to substrate thickness verification by reconfiguring the beams generated by the same ultrasound apparatus used for the imaging of a weld;

Figure 8 is an illustration of an observed ultrasound echo in a signal trace and an interference burst in the same signal trace at a different time;

Figure 9a, b and c are illustrations of the signal traces from three successive data acquisitions and the indications of interference bursts within those

Figure 9d is a processed signal trace based upon the averages of the signal traces in Figures 9a, 9b and 9c;

Figure 10a is a plot of four separate but superimposed signal traces, where three are rectified signal traces from Figures 9a, 9b and 9c all of which have interference bursts, but occurring at different time positions and the fourth is the resultant rectified signal after processing to remove the interference whilst preserving the real echoes;

Figure 10b is a process rectified signal trace along with the four traces showing the selected contributions on a sample-by-sample basis from each of the three original rectified traces and the fourth being their average;

Figure 11 is a process unrectified signal trace from three other traces and also showing the selected contributions each of those three signal traces make to the unrectified trace;

Figure 12 is an illustration of an unrectified waveform according to one embodiment;

Figure 13 is a schematic flow diagram relating to the selection process for the choice of interference processing technique used;

Figure 14 is an illustration of interference on different channels, illustrated by a scope display, image display and amplitude + time of flight displays;

Figure 15 shows the impact of processing on the multiple channels displayed in Figure 14;

Figure 16 illustrates a further approach to the identification of interference in sections of traces, the identification of sub-sections not to use in a processed trace and the resulting processed trace; and

Figure 17 is a schematic illustration of an adaptive control capability for welding processes conducted according to the disclosure;

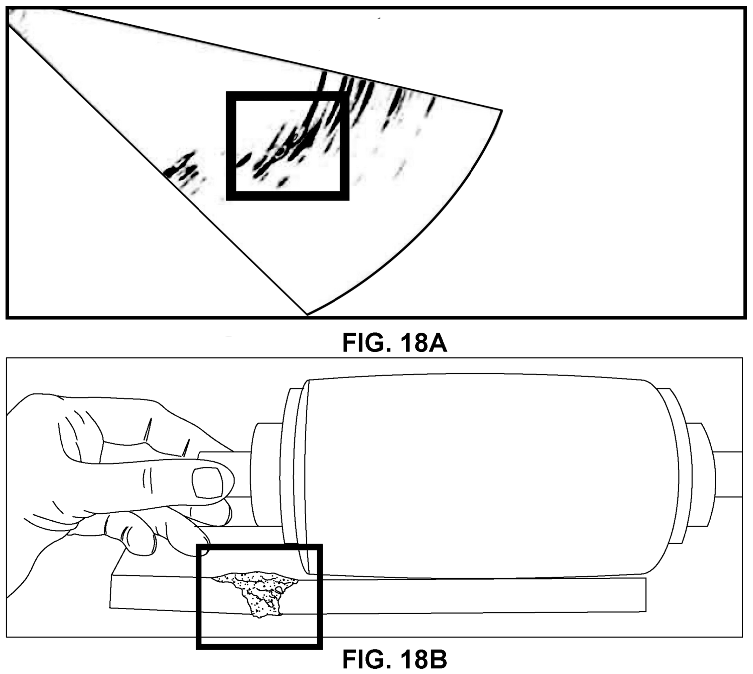

Figure 18a is an image of an ultrasound probe detected defect;

Figure 18b is an image of the ultrasound probe used in the detection of Figure 18a;

Figure 19 is a plot of outlier score obtained from acoustic signals v data point for a variety of different welding conditions;

Figure 20a is a perspective view of a profile sensing device relative to a substrate and weld;

Figure 20b is a schematic illustration of the sequence and geometry of the formation of an overall weld through a series of weld passes;

Figure 21 is a series of camera images of a welding location during welding;

Figure 22 is a plot of arc voltage and a plot of Gaussian amplitude x Gaussian centre v time for a welding process;

Figure 23 is an illustration of the combined data types displayed to a user;

Figure 24 is an illustration of a second level of processing applied to data from a plurality of sensor types.

Ultrasonic testing is used for the non-destructive testing of a wide variety of objects. A transmitting transducer emits ultrasound waves which enter the object, interact with the object and sub-features thereof, and then return to a receiving transducer. The temperature of the object has an impact upon the speed of sound within the object and hence can negatively impact upon the quality of the testing and imaging if the incorrect speeds are used.

When testing welds, after completion of the weld or after each individual weld pass, it is desirable to be able to conduct the ultrasound test soon after the weld or weld pass has been formed, so as to minimise the time take to perform, test and then make any corrections needed to the weld or weld pass or to optimise the welding parameter. However, this means that the ultrasound test is conducted whilst the object or substrate is at elevated temperatures and with temperature variations between parts and/or within parts of that object or substrate.

To be able to accurately detect defects and more generally image a weld location, the disclosure provides a method for establishing the temperature profile, considers the impact of that on the ultrasound and corrects for the position. As a result, accurate imaging under a wide range of temperatures and accounting for different temperatures at different locations, particularly in high temperature contexts, is provided and the method is useful in allowing earlier inspection of weld locations without requiring them to cool and diminish temperature impacts on the ultrasound.

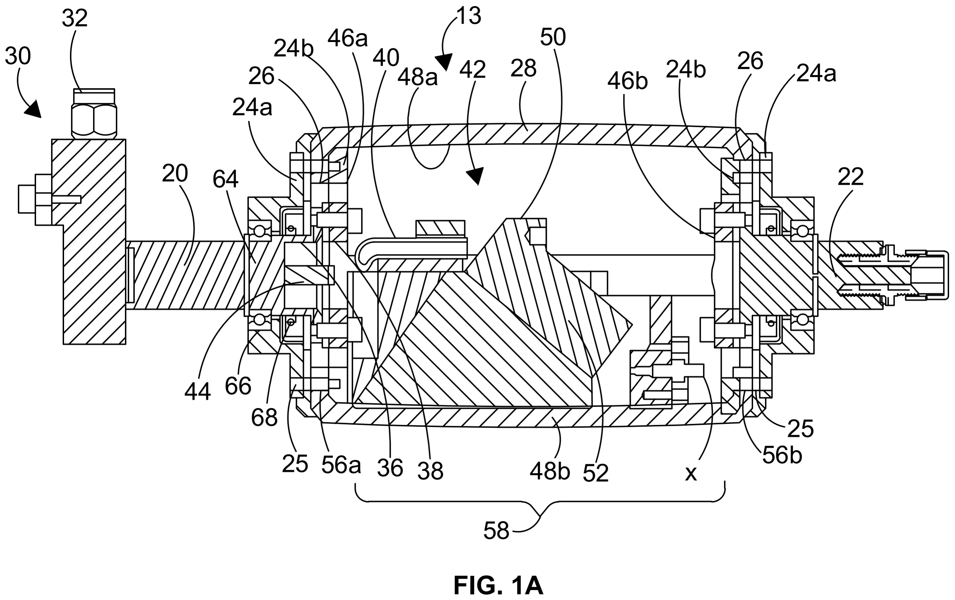

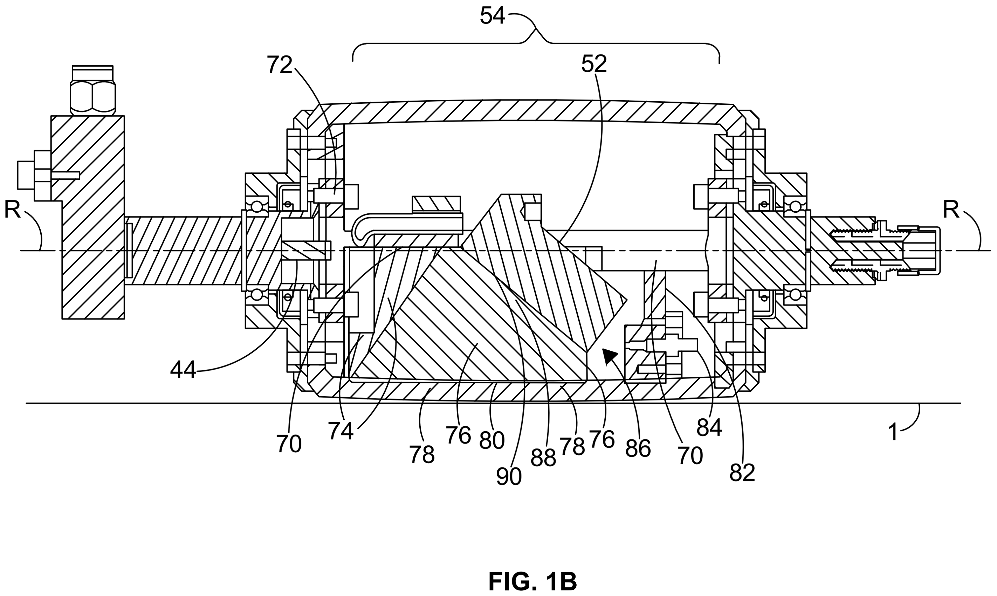

The disclosure is in part concerned with making accurate ultrasound-based images of welds in a high temperature context. Full details of a probe device suitable for use in such an environment is provided at the end of this document with reference to Figures 1a and 1b. It should be noted however, that the probe need not be a roller probe and that a wedge type probe which is placed on the substrate and moved from location to location could still be used and yet provide the benefits of the disclosure.

The basic structure of the probe device includes an axis of rotation R-R that extends through the probe 13 and on which a second axial element 70 is provided connected to the axial element 64 by a series of releasable fasteners 72. The second axial element 70 provides a mounting for the transducer 52, for an anti-echo block 74 and an ultrasound conveying block 76.

The coupling element 28 between the probe 13 and the substrate [not shown] is a unitary piece of compliant material, discussed further below. The coupling element 28 is provided with generally right cylindrical main body part 54 and with an inwardly turned rim 56a, 56b at the ends.

The transducer 52, anti-echo block 74 and conveying block 76, together with the second axial element 70, the axial element 64 and the first mounting location 20 do not rotate as the probe 13 rolls over the surface of the object. Thus, the transducer 52 and associated components are maintained in the same sensing orientation opposing the object, at all times.

The internal volume 42, potentially to a level above the maximum vertical extent 50 of the transducer 52 to enclose the components to cool, is provided with a coolant which is actively introduced into and removed from the probe to maintain the probe within tolerable temperatures.

Also mounted on the second axial element 70 is a mounting element 82 that carries a thermistor 84 for temperature sensing of the coolant at a location 86 close to the part of the inside surface 78 that abuts the welded location.

With respect to the passage of ultrasound waves, the coupling element 28 is a higher temperature compatible silicone rubber. The material selected is able to withstand temperatures in excess of 350°C for prolonged periods. Such materials can have an attenuation of 0.87dB/mm at 5 MHz and an acoustic impedance of 1.12 MRayls and so is a good alignment with the other materials employed.

In terms of the thickness of the coupling element 28, a balance is struck between increasing thickness giving more thermal insulation to the probe contents and increasing thickness causing detrimental increases in attenuation. A thickness of between 2mm and 10mm, for instance between 4mm and 8mm is suitable for such materials in the operating conditions under consideration.

The chosen materials for the coupling element 28 also offer sufficient compliance for it to conform to the surface of the object under moderate applied force levels. High force levels are undesirable in terms of the equipment needed to generate them and still move the device over the test piece. A compliant material is needed to gain good contact for the transmission of the ultrasound, without undue loss, given that the surfaces of the objects encountered in real world situations are not highly finished or smooth.

With respect to the passage of ultrasound waves, the anti-echo block 74 has an important role in preventing ultrasound waves bouncing within the probe and causing noise or other negative impacts upon the probe. Hydrogenated nitrile rubber, HNBR, was found to be a suitable material, particularly N filler forms thereof. This was due to the 6.4dB/mm attenuation provided at 5MHz.

All of these features serve to assist with successful acoustically coupling of the probe to the object through the real-world surface encountered.

In terms of the coolant, air offers poor thermal capacity and conductivity for active cooling. Water is also a sub-optimal as its acoustic impedance at 1.5 MRayls is a poor match for the other components, it is not well suited to the temperatures encountered and also has a tendency for the sliding interface to bind rather than act as a lubricant. Providing the coolant, in the form of a watersoluble oil, for instance which has an acoustic impedance of 1.1 MRayls and so is a better match with the acoustic impedance of the coupling element [1.1 or so MRayls].

The transducer 52 provides a 5 MHz 64 element phased array and is mounted to generate 55° ultrasound waves into the object. A 0.5 mm pitch and 10 mm elevation can be used. An angled beam is beneficial in being able to inspect the weld fully from a laterally spaced location. Frequently, that laterally spaced location will be more amenable to good contact between the probe and the object, than at the location where welding is occurring. For instance, in multi-pass welds, until the weld is completed, there will be a significant depression which will interfere with good contact and ultrasound propagation into the object. Oblique inspection angles are also a better match with the typical defect orientations. This is an issue with 0° or low angle-based approaches.

This type of transducer and conveying block configuration can be used to provide a sectorial scan beam defined by the upper extremity beam [angled away from the perpendicular to the transducer face] and the lower extremity beam [near perpendicular to the transducer face] emitted. In terms of the performance sought for the probe in terms of high temperature performance, the disclosure provides probes that are capable of inspecting for prolonged period objects that are at ≈300°C.

The coupling is dry but still achieves the necessary levels of ultrasound propagation through the interface into and back from the object.

The high-temperature polymer used in the coupling component is able to withstand prolonged contact with objects at such temperatures and still propagate the ultrasound to and from the interface successfully.

The coolant and hence the coolant-filled gaps are able also to effectively propagate the ultrasound waves to and from the conveying block.

Optimal propagation properties for the conveying block are provided as the block is exposed to near ambient temperatures only and so there is no need to choose high temperature resistant materials which have lesser ultrasound propagation properties.

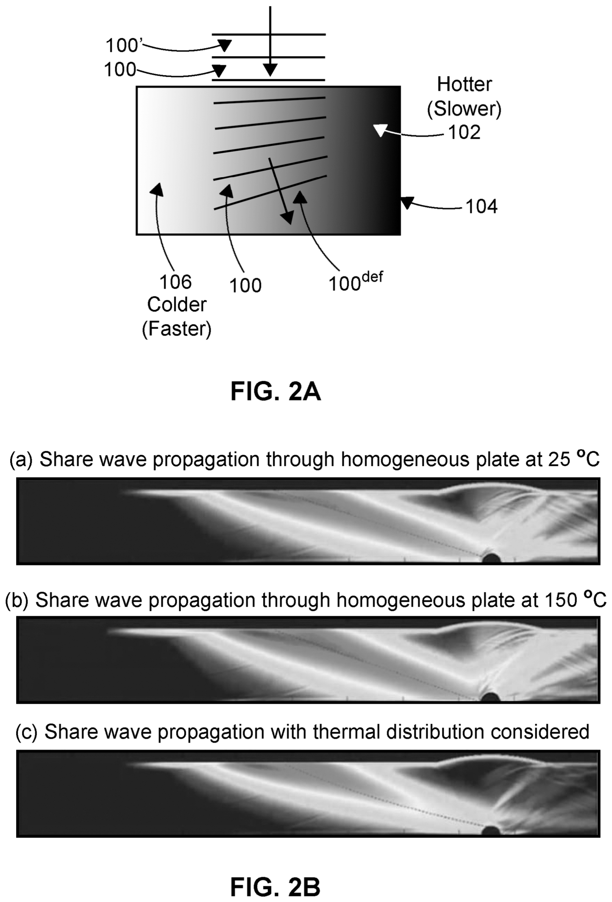

The speed of sound in all the components along the acoustic path, that is the ultrasound conveying block 76 [the wedge between the transducer 52 and the compliant material 28], the compliant material 28 [the tyre] and the substrate being welded, varies with temperature. This in turn means that the angle of refraction varies with the material temperatures at each interface between them. In addition, the beams within each material will bend if there is a thermal gradient within that material. For instance, and referring to Figure 2a, the beam wavefronts 100 will travel slower in the hotter part 102 of the substrate 104 than in the colder part 106 of the substrate 104. Hence, the beams 100 will deform from linear beams 100' at entry to the substrate 104, due to the beam part in the colder part 106 moving ahead of the beam part in the hotter part 102. Hence, the uneven temperature distribution causes the beams 100 to bend, such as beam $100^{def.}$

The effect can also be observed in Figure 2b, where: (a) shows the shear wave propagation through a plate as the substrate to a defect position, with the plate at a homogenous 25°C; (b) shows the different shear wave propagation through a plate as the substrate to a defect position, with the plate at a homogenous 150°C and the angle of incidence adjusted to keep the beam pointed at the same target; and (c) shows the shear wave propagation through a plate as the substrate to a defect position, with a non-homogenous temperature state.

To be able to account for the beam bending which may occur, it is necessary to be able to establish the temperature as far as possible throughout the ultrasound path and particularly in the higher temperature and higher potential variation sections. If the temperature distribution is known, then the beam bending can be predicted and an appropriate correction can be made in the configuration and operation of the device [for instance to deliver the focus beams to the desired location] and/or applied to the signal processing for the returned beams [for instance to give more accurate imaging].

A first stage in the determination is to perform thermal modelling on how the heat input from the pre-heating and the additional heat input from the welding itself is distributed over the metal volume of the substrate as a function of time.

In one approach to the verification of the thermal modelling, a substrate was provided with a large number of distributed thermocouples on the substrate in the form of a steel plate. Thermocouples were provided on both the upper and the lower surfaces of the substrate. The substrate was then pre-heated to the optimum temperature for the welding and then various welding head passes were performed and the thermocouple response obtained. It would be possible to increase the extent of modelling by also varying the level of pre-heating, but frequently that is within a consistent and tight temperature range between examples of the same substrate and even between different substrates [thickness, profiles, steel types etc]. Hence, little variation due to pre-heating might be expected.

Having conducted thermal modelling of this type, the safe operating temperature of the probe described above [based upon knowing the response with time of the probe when exposed to different temperatures] can be compared with the temperatures at different locations away from the weld and so the modelling enables a closest safe distance for the probe following behind the weld head to be established.

Significantly for the thermal modelling with substrate depth, these investigations established that the temperature distribution rapidly stabilised after welding had occurred into thermal contours perpendicular to the metal surface. This greatly simplifies geometry of the temperature distribution and hence the compensation calculations, particularly when the impact upon multiple skips through the substrate need to be compensated for. A skip is the ultrasound entering the substrate through an interface, internally reflecting off the interface at the other side of the substrate and returning to the entry interface.

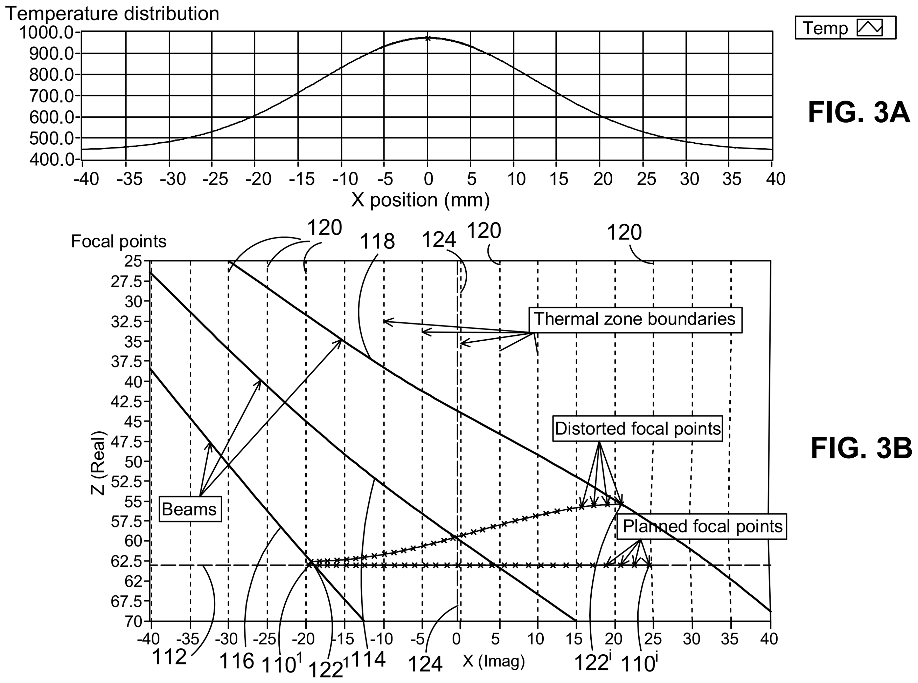

With respect to the thermal modelling of spread into the substrate relative from the welding location which has the highest temperature, the temperature distribution is often, but not always, one which is symmetric around the centre of the weld and so the beams undergo a complex S-shaped distortion as they pass through the weld region. This can be seen in the temperature distribution of Figure 3a and the ray-tracing analysis of Figure 3b, where the position is expressed in mm to either side of the welding location and the welding location has the highest temperature [1000°C in this case]. An exaggerated thermal gradient was used to emphasize the magnitude of the beam bending in this example.

Referring to Figure 3b, the deviation caused by the temperature distribution in the context of a weld inspection is illustrated in more detail.

A series of planned focal points, 110' to $110^i$, extend along a plane 112 which has a near plane end where planned focal point $110^1$ is provided. The near plane end is towards the probe 13. The planned focal point $110^i$ is provided at a far plane end, and this is further away from the probe 13. The plane 112 is parallel to the upper surface of the substrate in the case of a plate and so represents a constant depth into the substrate in such a case.

For the planned focal points $110^1$ to $110^i$, the transducer 52, and hence the beams produced, are angled relative to the upper and lower interfaces of the substrate. An angle of 55° may be employed in this respect and so defines scan arc centreline 114. The control system for the transducer 52 allows the beam to be steered to different angles and hence provide a sector scan. All the array's elements [64 in this example] are used for each transmission of a beam, but with differing excitation times for each element so as to steer and focus the resulting beam to the required location. In effect this defines the boundaries 116 and 118 for the scan arc, which define the lowest angle and the highest angle at those boundaries, and hence both end planned focal points $110^1$ and $110^i$.

As established in the thermal modelling, the temperature contours 120 are often perpendicular to the surface of the substrate. However, the methodology is able to function with other contour or boundary orientations and/or profiles and so can account for a full and wide range of different temperature gradients in different directions in a substrate.

The more thermal boundaries that are used to divide the substrate up, then the more accurate the accounting for temperature distribution can become and the more accurate the determination of the actual geometric location points $122^1$ to $122^i$ can become. Of course, the temperature variation is continuous, but a large number of step wise variations can be used to accurately represent the same impact.

Each time a beam crosses a thermal boundary, then a correction can be applied to its path based upon the temperature change the boundary represents. This gives a new path for the beam and hence a new path length section before the next thermal boundary is crossed. Again, a further correction provides a further new path and so on. The results can be seen in Figure 3b in terms of the actual geometric location points 122' to $122^i$ which are determined as the geometric locations from which the signal samples actually originate. The profile of the actual geometric location points $122^1$ to $122^i$ is caused by the beam bending to a progressively shallower angle and the wavefront decelerating as it encounters the higher temperatures towards the weld centre, plane 124. The angle gets steeper once more and the wavefront accelerates again and bends back the other way after passing the weld centre, plane 124.

Given this difference between the actual geometric location points $122^1$ to $122^i$ the signals originate from and the planned focal points $110^1$ to $110^i$, the scan conversion algorithm has to plot the observed signals at the actual geometric location point, for instance $110^1$, in each case rather than at the corresponding planned focal point, for instance $122^1$.

An analogous process is performed on receipt, with the signals from each channel being subjected to different time delays so that the sum from all channels adds coherently to increase the net response from a specified direction and range. A potential disadvantage here is that the steer angle and focus are fixed at acquisition time and so it would not be possible to correct later for any error in the thermal distribution.

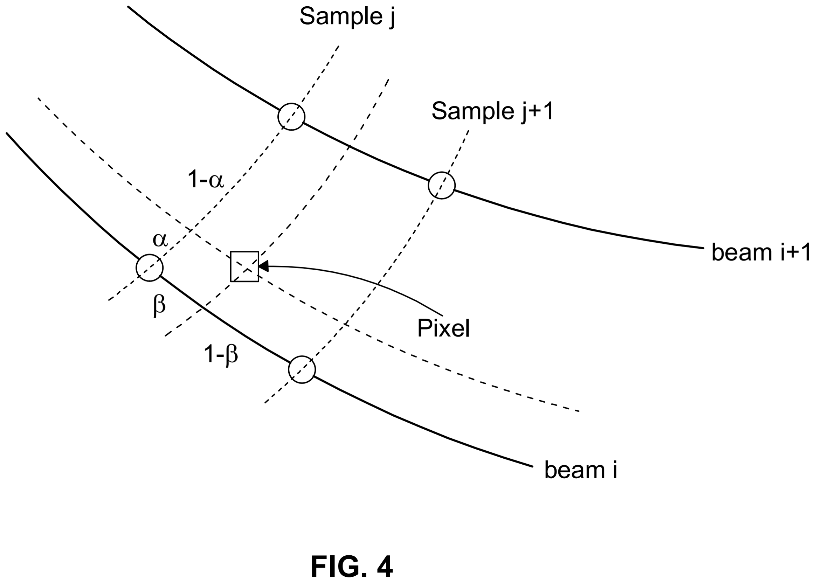

- Figure 4 provides further explanation of the manner in which the position for a pixel at a position between a first beam i and the next, adjacent beam i+1 is considered. In this illustration: $A_{ij}$ is the amplitude of sample j in beam i;
- $W_{ij}$ is the weighting factor of the contribution from sample j in beam i;
- $\alpha$ is the fraction of the distance of the hypothetical beam that the pixel lies on from beam i to beam i+1;
- $\beta$ is the fraction of the distance through the sample along the hypothetical beam that the pixel lies on, from sample j to sample j+1.

Thus:

$$A_{pixel} = (1-\alpha).(1-\beta).A_{ij} + (1-\alpha).( \beta).A_{ij+1} + (\alpha).(1-\beta).A_{i+1j} + (\alpha).( \beta ).A_{i+1j+1}$$

$$Apixel = Wij.Aij + Wij+1.Aij+1 + Wi+1j.Ai+1j + Wi+1j+1.Ai+1j+1$$

The configuration doesn't change between each acquisition and so, for speed of image generation, the values of $i+\alpha$, $j+\beta$, $W_{ij}$, $W_{ij+1}$, $W_{i+1j}$ and $W_{i+1j+1}$ are pre-calculated for every pixel in the display area and stored in a lookup table. During the imaging operation, the addresses for the beam and sample data contributing to each pixel (i, i+1, j and j+1) can be derived by simple truncation of the $i+\alpha$ and $j+\beta$ values in the lookup table. Generating the overlays, such as the beam marker for the selected A-scan data, is a straightforward operation when the beams are straight, but it is more complicated for bent beams, which is the case where there are thermal gradients. For this, an inverse lookup process - from pixel to beam and sample - is required, and means it is beneficial to hold the $i+\alpha$ and $j+\beta$ values in the lookup table.

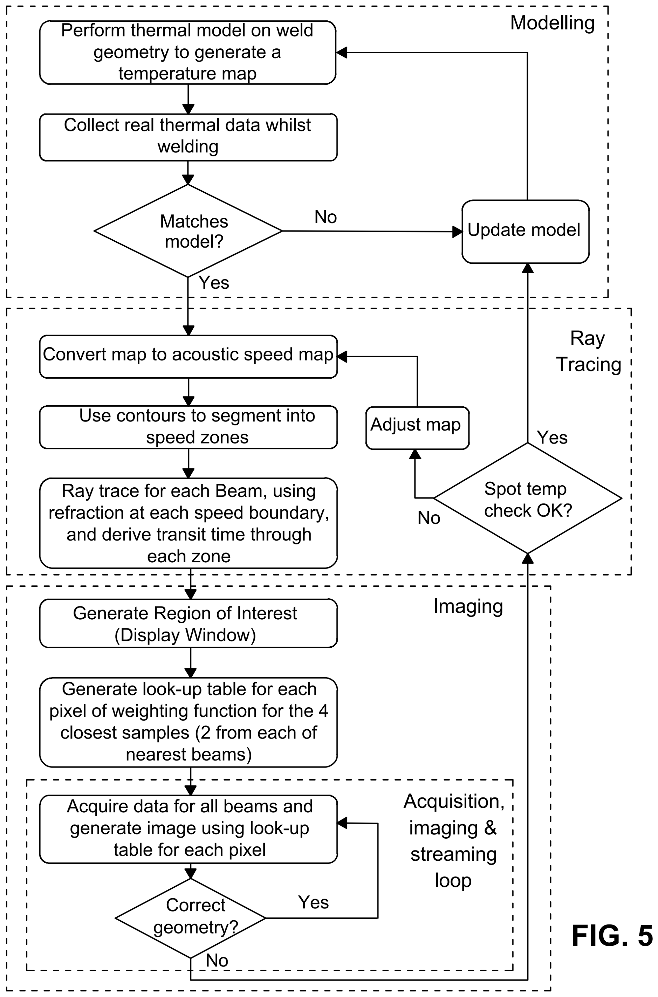

Figure 5 shows a complete flow path for the process including the modelling stage, ray tracing stage and the imaging stage.

In the modelling stage, a thermal model is generated which informs on the temperature at each data point. The initial thermal model may be based upon previously stored information from previous actual welding operations and/or from previous thermal models.

Real thermal data is then collected for the welding environment. This may be obtained by inputs [for instance the pre-heating temperature being provided and/or the welding conditions] and/or may be obtained from temperature sensors in the welding environment [for instance, thermistors associated with the probe, other temperature sensors, infra-red sensors or the like] which can inform on the temperature and position for that data. The combined data is used to form a real thermal data set.

A comparison of the real thermal data set and the thermal model is then conducted to assess the extent of correspondence between the two with respect to temperatures at positions. If the discrepancies in the extent of correspondence are too high, then the thermal model is updated. A new comparison is made and that cycle is completed until the real thermal data set and the thermal model are deemed a match. The ray tracing stage can now commence.

In the ray tracing stage, the thermal model accepted in the modelling stage is converted into an acoustic speed map. The substrate is known and the acoustic speed with temperature for that substrate can be established through calibration tests. That calibration data is stored and is accessible for use in the generation of the acoustic speed map. A temperature at a data point is converted to a speed. Speed contour intervals can then be set and the acoustic speed map subjected to the application of contours through data points with the same speed. In this way, the substrate is divided up into different speed zones.

The starting point for each ray [beam component] is known, together with its initial path. Each time a projection of that path crosses a speed boundary, then a representation of refraction is applied. The representation of refraction applied varies in extent dependent upon the speed differential that the contour represents compared with the previous one and varies in direction, dependant upon whether the speed contour is an increase or decrease compared with the previous contour.

The speed and the path length between contours gives a transit time through that speed zone.

The process is repeated for each contour crossing within the probe on the way into the substrate. The process can be repeated for the echo on each contour crossing on the way out of the substrate. The ray tracing step completed for each ray, then the process can advance to the imaging stage.

In the imaging stage, the initial step is to generate a region of interest that a display of results is desired for. This may be influenced by the substrate shapes, weld shape or configuration, manner of the weld being provided and the like.

The way to generate the value for a pixel is basically a linear interpolation between the 4 closest real samples. To avoid the time penalty in calculating this on the fly, the addresses of the four samples, and the weighting value for each, are pre-calculated and stored in a look-up table. Each newly-acquired set of data is then scan-converted into the rectilinear displayed image by processing each pixel in turn, by accessing the 4 samples and multiplying each by the associated weighting function before summing to form the final pixel value.

Pre-existing information on the geometry exists with respect to the weld groove position, shape and orientation, and so this can be checked against the observed geometry in the results. If these correlate, then the acquisition can continue. If these do not correlate, then the compensation is not being correctly applied and a check is needed on the temperature data which is fed into that compensation.

If the temperatures detected are not a match for the thermal model, then there is a need to correct that and readjust the acoustic speed map for that correction. The corrected acoustic speed map can then be used in the process steps described above.

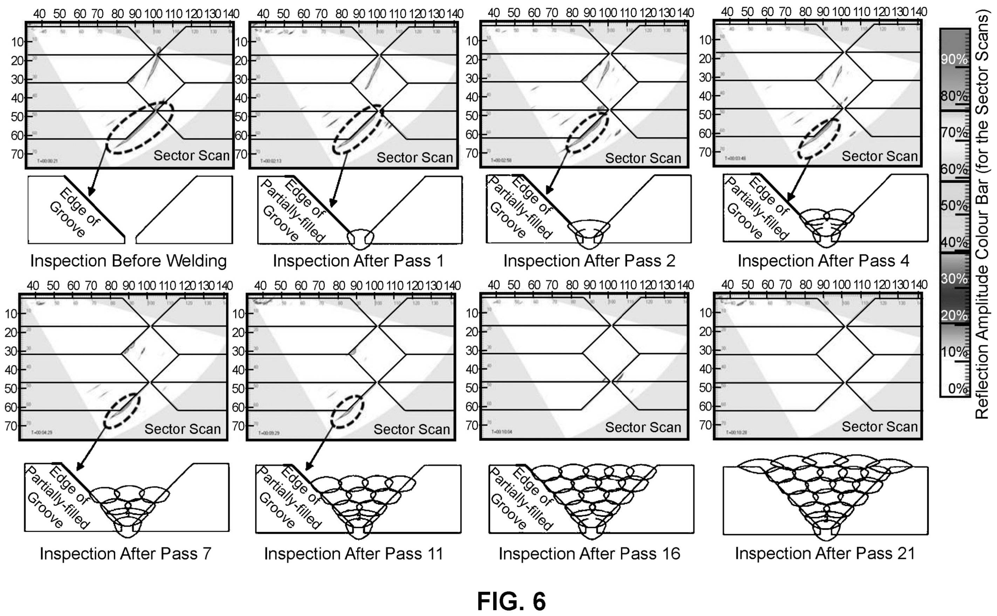

Some example signal results, in this case the progressive filling a weld groove through multiple weld passes are shown in Figure 6. In the first sub-figure, the groove is devoid of welds and the edge of the groove is detected in the ultrasound image. As weld passes gradually fill the groove from the bottom in the numbered sequence, the extent of the edge of the groove exposed is reduced and so the extent of the echo in each image is less than in the previous one and finally then disappears.

If a defect were found, then that would appear in the image, towards the right-hand side of the image compared with the remaining section of the weld groove wall.

The implementation discussed above is based around the use of thermal contours to derive transit times and hence correct for temperature distributions. Beam reflection is fully accounted for and the beam paths are determined.

In an alternative implementation, Full Matrix Capture (FMC) can be used in combination with Total Focusing Method (TFM) for the same purposes but considering a much larger and fuller data set.

FMC is a technique similar to holography in that the raw data signals, containing the time sequence of amplitude and phase, are collected from every transmit (Tx) element and receive (Rx) element combination. The image is reconstructed from this FMC data set by creating virtual paths from every element to every pixel and performing the differential delays as a post-processing operation. This means that every pixel can be in the ideal focus, on both transmit and receive, and the approach is referred to as the Total Focusing Method (TFM) for this reason. The same technique as above, with the gradient approximated by multiple separate thermal zones, is used to determine the Thermal Gradient Compensated transit time from each element to each pixel, as required by the TFM reconstruction algorithm.

### Verification of Substrate Thickness

As discussed above, the temperature profile within the substrate is an important issue that needs to be addressed. The applicant has also found that there is material variation in the thickness of substrates, such as plates, even when stated by the manufacturer to have a given thickness. This also needs to be accounted for if imaging is to be optimised.

The beam path length is influenced by the thickness and the variations observed give 0 to 5 mm variations in path length compared with that associated with the stated thickness value for the typical material thicknesses. It should be borne in mind that the path length is multiplied by the number of half skips taken. To determine a defect position correctly, it is necessary to establish the actual distance for the path lengths to and from it, rather than the assumed path length based upon the stated substrate value.

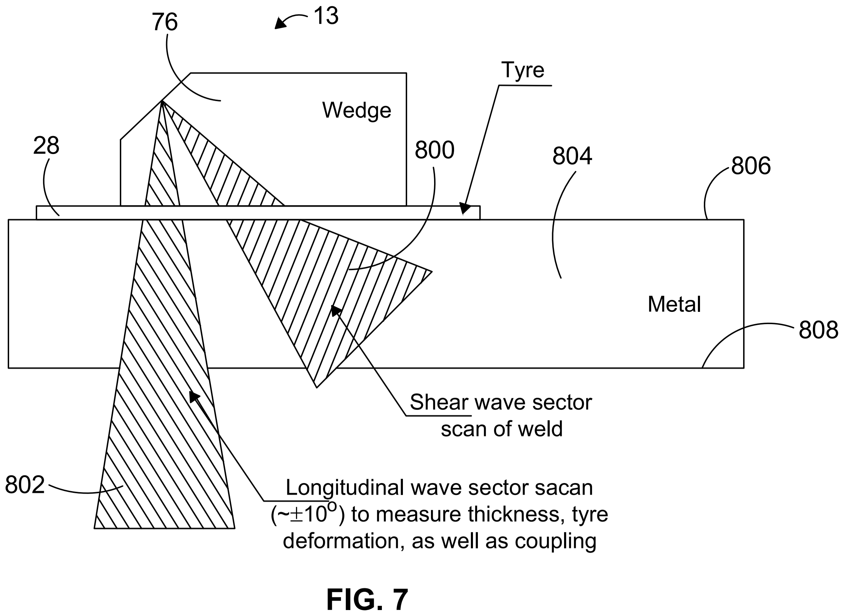

As a pre-weld inspection step, it is possible to move the probe over the same path over the substrate that it will take during welding inspection. The ultrasound beam can be used to establish the thickness of the substrate. This approach is illustrated in Figure 7.

The roller probe 13 discussed above is only partially shown in Figure 7, in terms of the coupling element 28 and the conveying block 76. The transducer 52 is not shown but would be positioned adjacent the angled face of the conveying block 76. Unlike the angled shear wave sector scan of the weld for inspection purposes described above, NDT beams 800, the thickness measurement beams 802 is operated at 0° (i.e. perpendicular to the metal faces) to the substrate 804 or object. The beam is steered away from the NDT beam 800 position using the control electronics to give the position of the thickness measurement beam 802. To ensure that the $0°$ beam is included, a sector scan centred around $0°$ and comprising a number of longitudinal beams is used.

Whilst 0° beams have been used to check the amplitude of the back-wall echo from the substrate 804, as a way to monitor the quality of the coupling between the probe 13 and the substrate 804, in this case the beam is additionally used to measure thickness and not just ensure a given echo strength is present.

The strongest echo received back at the detector in the probe 13 corresponds with the first interface 806 where the probe 13 abuts the substrate 804. The second strongest echo corresponds to the interface 808 on the opposing side of the substrate; an internal reflection. The method uses the echoes, and their repeats, to measure the local thickness, so as to compensate for positioning the region of interest.

By using a narrow sector beam for the thickness measurement beam 802, rather than a single beam, the method is able to establish which angle produces the strongest repeats and this can provide information on any tapered compression of the coupling element 28, a tyre in this example. Tapering can cause refraction of the beam and hence is another issue that may need correction for in imaging the weld with the correct geometry.

The positions detected, corrected as above for temperature, can be used to establish the actual distance along that path length. Correction for temperature in the conveying block 76 is still needed to achieve the 0° measurement direction; that is perpendicular to the substrate, the minimum distance through the substrate or thickness. This can be noted for use at the same position along the path on the substrate during the inspection of the weld to correct the imaging and hence the position of any defect found.

Alternatively, the probe can rapidly switch between a weld inspecting mode and a thickness determining mode and repeat through that cycle, as the probe advances along the weld path during the actual weld inspection to determine thickness.

As a result of either approach, the actual thickness is known at any position along the weld path, as compared to the theoretical value, and so that thickness can be used in the correction of the images with respect to positions of geometry features and/or defects.

### *Handling of RF Interference*

Significant interference bursts from the robot motors for the welding arm, for the probe arm and other tasks, were observed in the signal traces for the ultrasound detection. These were found to be several times greater than the ultrasound echoes, even from the planar interfaces. Other bursts are less strong and so harder to distinguish as being bursts. The planar interface echoes are themselves often far stronger than defect echoes. Other interfering sources also exist and can be addressed by the techniques herein provided. For example, electrical interference is generated by a wide variety of motors, such as those used to pump cooling systems encountered in welding applications and their measurement. Other sources might include drive motors for lifts, power supplies and the like. Hence, a solution which addresses that interference is desirable to enable effective imaging.

The broadband nature of the bursts means that band-pass filtering techniques have limited effect in reducing the amplitude of the interference.

The smaller the signal on return, the greater the issues, and in a high temperature probe environment, the transducer to compliant material distance, the dry interface to the substrate and the same factors on the return, all attenuate the signals and make noise more of an issue.

In addition, the timing of the interference bursts is irregular in occurrence and duration, depending upon the motor tasks each arm is being asked to perform.

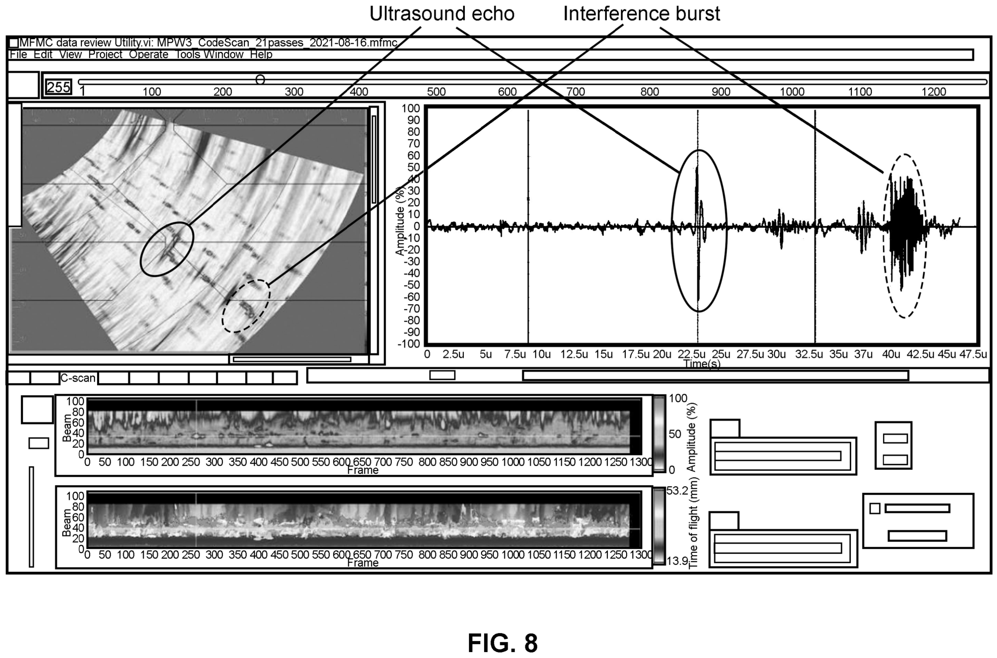

Figure 8 is an illustration of a signal trace with an ultrasound echo for a defect towards the mid-point of the signal trace and with an interference burst towards the later part of the trace.

The intermittent nature of the interference can contribute to the solution, however.

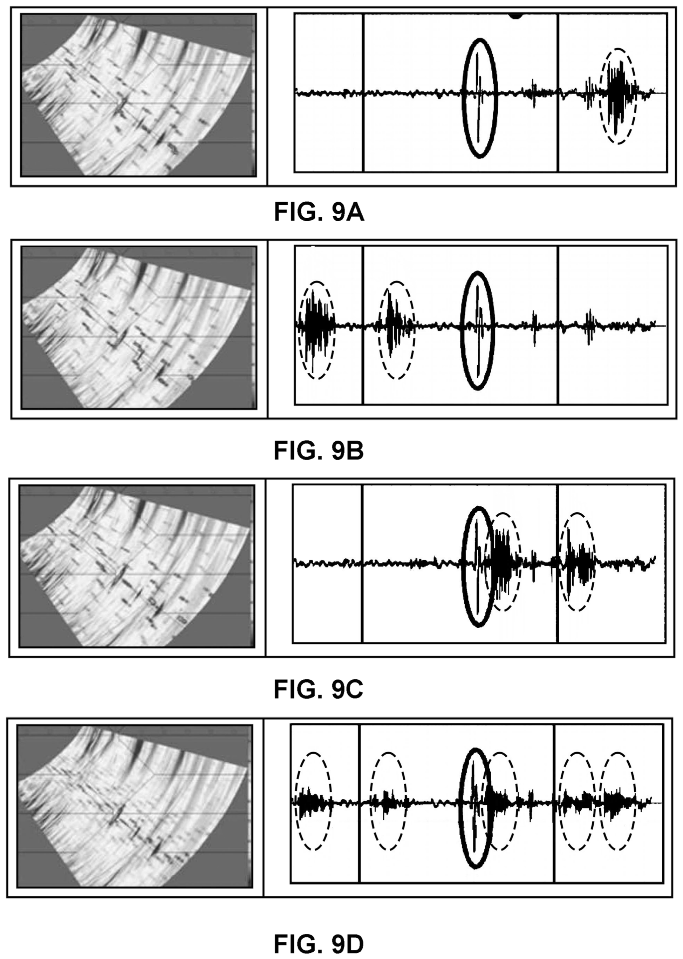

In a first embodiment aimed at accounting for interference bursts, the transducer is used to send a series of beams out through the substrate and the return signals are detected as before. In the illustrated example, Figure 9a, 9b and 9c, three such detected signal traces are shown.

The interference from a robot motor is in short high frequency bursts which are separated by gaps that are significantly longer than the ultrasound pulse repetition period. This time difference means that if a burst from a robot motor appears on one beam, it will not appear on the following beam, and so the interference-free data from this second signal can be used to replace the contaminated samples in the first beam. If there is a second independent robot, it will act as a second source of interference, with the bursts being asynchronous with those from the first robot. Should the interference from this second robot happen to occur in the desired interference-free sample region of the second signal, the samples from the third signal will be clear and can be used to replace the contaminated samples.

In each case, the defect causes an echo in the trace at the same time due to the same position applying for the defect in all three traces. The time at the start of origin of the signal trace does not impact upon the echo, as the three traces arise from identical beams emitted along effectively identical paths into and out of the substrate [as the probe does not move a meaningful amount along the path in that timeframe] and encountering an identical substrate.

Also present in the later part of the first signal trace of Figure 9a is an interference burst. Potentially, a similar interference burst is also present in an earlier part of the trace for the second signal trace of Figure 9b. A further interference burst is also present in Figure 9b but is absent from 9a. In Figure 9c, two further potential interference bursts are present.

In Figure 9d, a signal trace is shown which is the sample-by-sample average of the three signal traces of Figures 9a, 9b and 9c, used to improve the signal to noise ratio [SNR]. As a consequence, the echo part of the signal trace is still prominent, but as only one signal trace contributes to the average for the interference bursts at any one part of the signal trace, those are diminished. This averaging approach can inform, in a basic manner and in some situations, on which are echoes and which are interference bursts. This technique does not attempt to identify the presence or timing of any interference burst; any such burst contributes to the average signal trace in Figure 9d. However, the amplitude of any burst is significantly reduced due to averaging multiple beams; the more beams that are averaged, the greater the reduction.

However, in some situations, simply reducing the amplitude may not be sufficient where the interference bursts are similar in magnitude to, or greater than, the echoes and/or the signals are more noisy or complex. If a burst gives the impression of an echo in the results, then that would lead to a false negative on the weld and un necessary further consideration and/or remedial action.

Improvements on the above technique can be obtained by identifying interference bursts correctly and ensuring that any echo which occurs in the same part of a signal trace is in some manner detected.

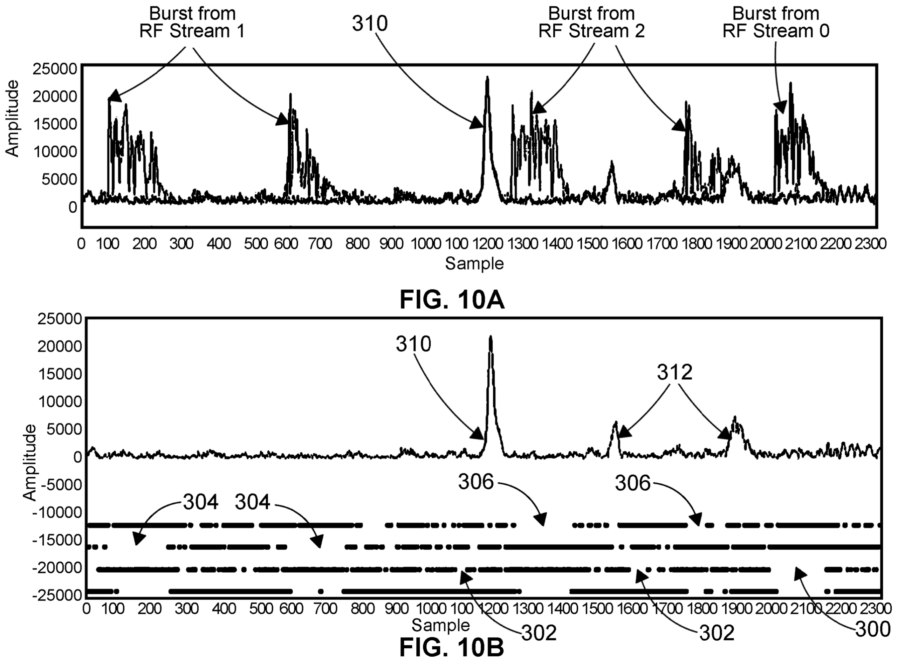

In Figure 10a, a more sophisticated approach to removing the interference from the signal trace is taken. Figure 10a shows three separate rectified signal traces, 0, 1 and 2, representing the same beam on three separate transmissions, plotted over one another.

The mechanism for determining whether a sample is likely to be from an interference burst is done by comparing the magnitude of the rectified (envelope-detected) samples from each of the signals 0, 1 & 2. The signal with the biggest magnitude sample is a candidate for being due to interference, and so selecting the smallest value across the signals is used in the final processed waveform. If none of the signal samples was from an interference burst, the amplitude difference across the signals will be quite small, as due to sensor or instrumentation random noise. Comparing this amplitude range with a threshold is therefore a mechanism for indicating the lack of any interference and therefore using the average of the sample across all signals for improved SNR. The threshold can be chosen as a value related to the expected noise amplitude, or can be chosen to be a defined proportion of the signal amplitude.

Signal trace 0 includes a high amplitude section towards the end of the signal trace which is not present in 1 or 2 and so this is deemed to be a burst from RF in stream 0. Thus, when the parts of stream 0 which are to contribute to the average signal trace to be formed, this section is omitted from that contribution. This can be seen in RF0 stream in the bottom part of Figure 10b where this part of the trace 300 is omitted. Other sections 302 are also omitted from the RF0 contribution where those spikes are not seen in the other streams.

Still averaging the contribution from those traces that are allowed to contribute to the average signal trace means that there is a signal to noise ratio improvement from the averaging of the uncontaminated traces.

In a similar manner, returning to Figure 10a, 1 includes two high amplitude section towards the beginning of the signal trace which are not present in 0 or 2 and so this is deemed to be a burst from RF in stream 1. Thus, when the parts of stream 1 which are to contribute to the average signal trace to be formed, this section is omitted from that contribution. This can be seen in RF1 stream in the bottom part of Figure 10b where these parts of the trace 304 are omitted.

A similar approach is taken for the two sets of 2 signal trace spikes in the second half of that trace and their omissions, sections 306, from the stream 2 contribution.

With these sections excluded, the sections contributing to the average trace are shown in the very bottom of Figure 10b and this gives the plotted signal trace in Figure 10b which shows the expected echo spike 310 clearly observed in Figure 10a, but also two other echo spikes 312 in Figure 10a. The remaining signal sections, Figure 10b lowest trace is informative and provides material amounts of time during which defect signals would be detected.

In the processing to this stage, there are sections of the average trace which are present, and these represent samples that have been determined to have no interference on any of 0, 1 and 2, and so can be replaced by the average of 0, 1 and 2; see Figure 10b lowest trace of the four. This averaging offers a signal to noise ratio reduction benefit. Where these sections are absent, one or more of 0, 1 or 2 has been identified as from an interference burst, and so the average of only the clear signals is used. This gives some signal to noise ratio improvement through averaging, but the number of contributors to the average is reduced by the excluded signals.

The use of this minimum or threshold approach across all potential traces is a fast and very efficient way to combine the possible interference exclusion and replacement trace section substitution. However, the technique does not identify bursts, but rather assumes that high amplitude sections, which are materially greater than the matching values from the other traces that don't suggest interference, are from bursts. A technique which more definitively identified bursts would be useful as if the interference is identified on only one of the beams, averaging over the rest of the beams will provide better signal fidelity, with improved SNR, compared to the minimum over all streams approach.

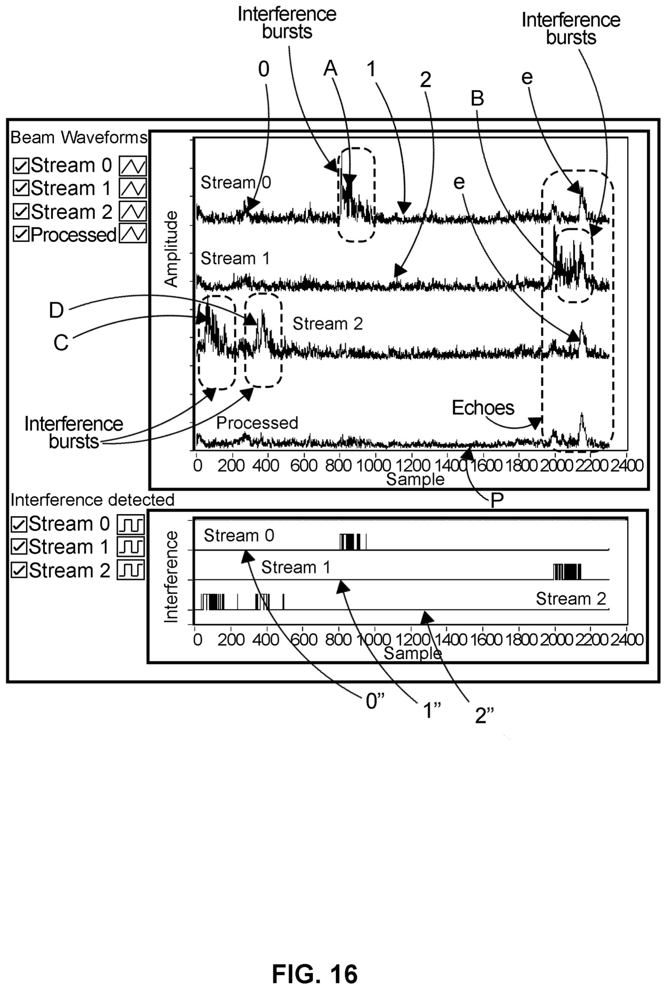

In a further approach, the interference detection and that the trace section substitution are handled in separate steps. This further approach is described below in conjunction with Figure 16 and this is a sample-by-sample approach.

By providing a generic approach that allows identification of the burst regions on each trace, the sections of all the traces which are free from contamination can be properly identified. The criteria used to determine the identification of a burst and the manner of substitution to replace burst containing sections can each be separately controlled or have their criteria varied, as needed.

In this generic approach, the first step is to identify the suspected interference sections on the streams or traces for each beam. This is achieved by:

1.1. If the input data traces/streams are full RF waveforms, perform envelope detection on each trace/stream waveform, to produce rectified traces/streams for each beam.

1.2. For each beam, find the minimum value for each rectified sample across all traces/streams, as this will be a good approximation for the interference-free value for that time sample.

1.3. Derive the difference between each trace/stream's sample and this minimum value, and mark it as interference if it exceeds a threshold. Note that this threshold can be a constant or adaptive, such as the minimum value multiplied by a defined factor.

In the second step, the method provides the interference removal by:

2.1. Use the interference marker (derived in 1.3) to reject any of the input trace/stream samples for that beam.

2.2. Average over the remaining samples across the traces/streams.

2.3. Use this average as the time sample for that processed beam.

Referring to Figure 16, the top three traces illustrate, in rectified data, cases where the top, middle and bottom waveforms in the upper part of Figure 16, are the streams 0, 1 & 2 for a single beam. The highlighted sections on these interference detection plots: one A toward the middle of stream 0; one B toward the end of stream 1; and two C, D toward the start of stream 2; are all sections where there is interference. The peaks e are echoes.

The application of the algorithm above gives the detection of this interference and marks in the interference treatment plots, the bottom three traces 0", 1" and 2" of Figure 16, those sections to be excluded from further consideration to reach the processed trace. Each of the sub-sections [represented by the individual bar-style peaks] within an interference burst section A, B, C, D, is highlighted for discard. These identified, highlighted, sub-sections are then excluded from the formation of the processed trace, trace P in the middle of Figure 16. This processed trace P shows the processed samples for the beams, illustrating both the removal of the interference bursts, and the reduction in noise in the rest of the waveform.

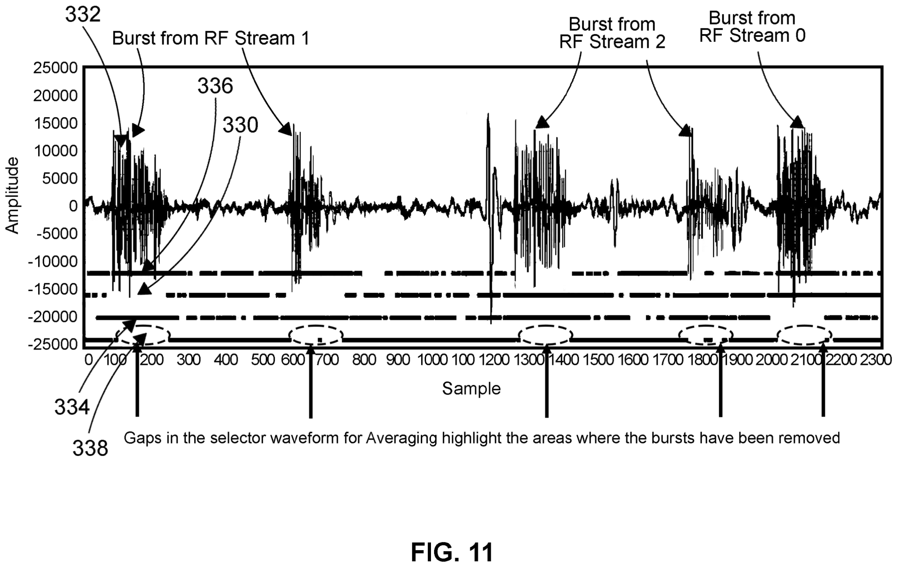

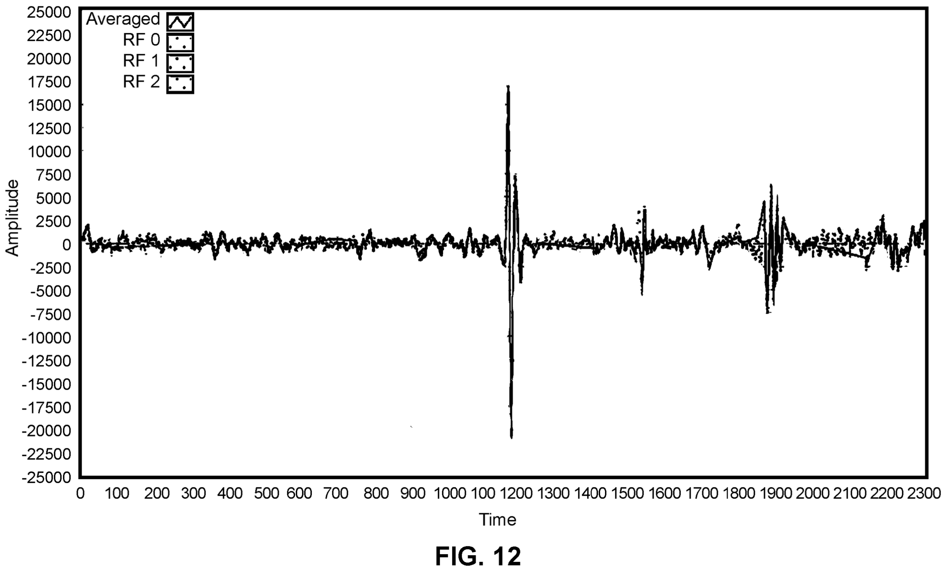

Figures 11 and 12 show a further modification of the approach so far, which is applicable to unrectified signals. This again is a sample-by-sample selection and so the generic approach of the previous embodiment can be used here too, with the attendant flexibility of criteria used and the signal to noise ratio improvements.

Here, the approach for identifying a sample that is clear from interference burst, by selecting between the signal with the minimum amplitude, will not work. Instead, the signals are first rectified, and the original approach then applied to these modified waveforms to determine if the sample in the final waveform is to come from signal 0, 1, 2 or an average. This selector mechanism is then applied to the original unrectified signals, resulting in a unrectified processed signal.

In Figure 11, a situation similar to that in Figure 10a is present with streams 0, 1 and 2 present. Stream 0 has an RF burst late in its signal trace, stream 1 to bursts early on in its signal trace and stream 2 has two bursts in the later half of its signal trace. If these contributions are excluded to give the average trace at the very bottom of Figure 11, then the same type of absent sections arise.

By further processing, however, it is possible to rebuild those missing sections using sections taken from one or both of the other signal traces. Thus, with respect to section 330 excluded due to RF burst 332 in stream 1, it is possible to make use of section 334 from stream 0 or section 336 from stream 2 to fill in the section 338 in the average trace. If both sections 334 and 336 are used to fill in, then their average may be used.

The outcoming of this infilling is to be seen in Figure 12, where significant sections of the overall trace are from the three trace average, some are from the two trace average, but other sections are filled in using one of the other traces. Missing sections from stream 0, are filled using stream 1 and/or stream 2 and so on. A continuous trace with no echoes missed results and full accounting for interference is provided in Figure 12 and no defects or echoes are lost.

Whilst the robotic motor interference is significant, the welding arc interference frequencies are not relevant to the frequencies of the ultrasound signals of interest and so do not require special treatment.

The approach for unrectified signals is also directly applicable to Full Matrix Capture signals. Here the combination of interference burst removal, and of SNR improvement by averaging where there are no bursts, are particularly beneficial due to the inherently lower SNR of each receive signal because it arises from a smaller excitation energy.

Minimising the computation time to process FMC signals is particularly important as there are many more signals in an FMC data set to be processed. If all the receive signals for a given element's transmission are acquired in parallel, the nature of the electromagnetic interference means that they will all have bursts in the same samples. Therefore, the multiple pulse set from only one receiver channel needs to be analysed to derive the sample selector, and this selector can be used across all the parallel receive channels, reducing the computation time.

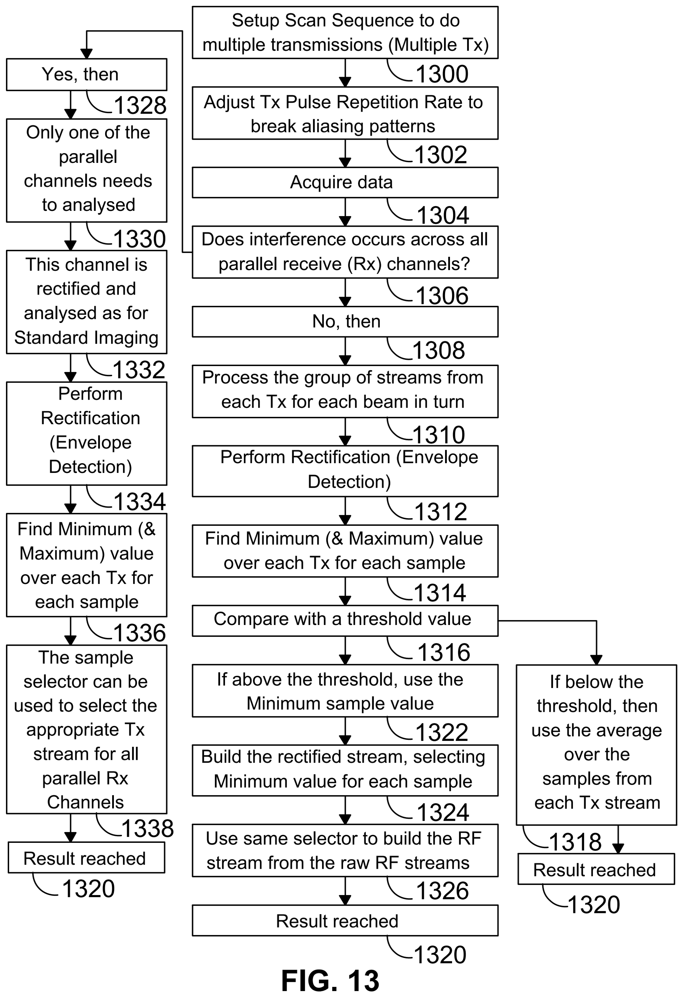

As the above-mentioned techniques require different amounts of computation, it is beneficial to select only the more computationally intensive techniques when necessary, and otherwise to use the alternatives. In this respect, Figure 13 represents a selection approach to the possibilities, taking into account the potential selection of the "average over the samples" approach [described above with reference to Figures 9a to 9d]; or the "minimum sample value" approach [described above with reference to Figures 10a, 10b, 11 and 12]; or, in the case of Full Matrix Capture, a "single channel rectification" approach. The single channel is rectified as above for the more general rectification.

Thus, referring to Figure 13, the system is set up to scan and obtain multiple signal traces from multiple transmissions, 1300. The repetition rate used is adjusted to avoid aliasing patterns 1302 and then the acquisition of the data [signal traces] can progress 1304.

With respect to the acquired data 1304, the processing considers 1306 whether or not there is interference across all the parallel received (Rx) channels, as may be the case in Full Matrix Capture approaches.

If there isn't interference in all channels 1308, then the signal traces for each of the multiple transmissions, Tx, is considered for each beam in turn 1310. The processing then performs the rectification 1312 using the approach outlined above. The minimum and the maximum for the signal traces are obtained 1314 and then compared with a pre-determined threshold.

If the value is below the threshold, 1318, then the approach proceeds by just using the average over the sample from each of the multiple transmission, Tx, streams so as to gain the result 1320. This is the approach described above with reference to Figures 9a to 9c.

If the value is above the threshold 1322, then a more discerning analysis approach is needed and the approach builds the rectified stream by selecting the minimum value for each sample 1324. The same selector is used to build the rectified trace from the raw signal traces signal traces 1326 and so gain the result 1320. This is the approach describe above with reference to Figures 10a, 10b, 11 and 12.

Returning to the earlier stage in the process where the question of interference being present in all channels is considered 1306, if it is 1328 then an alternative process approach is used. In that instance, only one channel needs to be analysed 1330 and that is done by rectification 1332 once again. Thus, the minimum and maximums are found 1334 and the sample selector can be used 1336 to select the appropriate Tx stream for all the parallel Rx channels. Once again the result 1320 is reached.

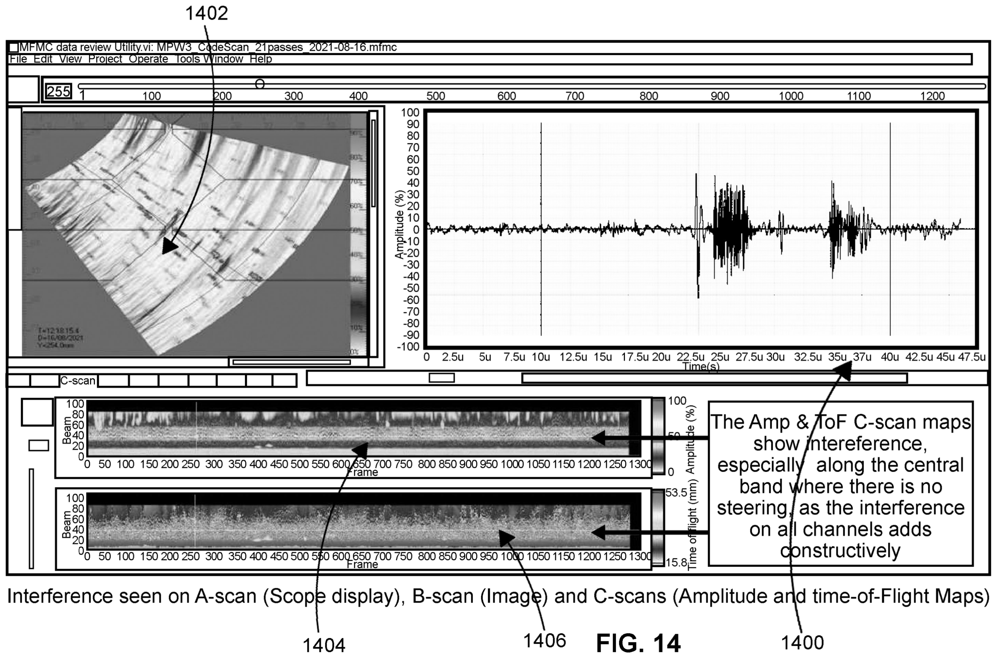

This approach where interference is seen on all channels is illustrated in Figure 14, where before processing there is material interference on the scope display 1400, image 1402 and the amplitude trace 1404 and time of flight maps 1406 in the other scan.

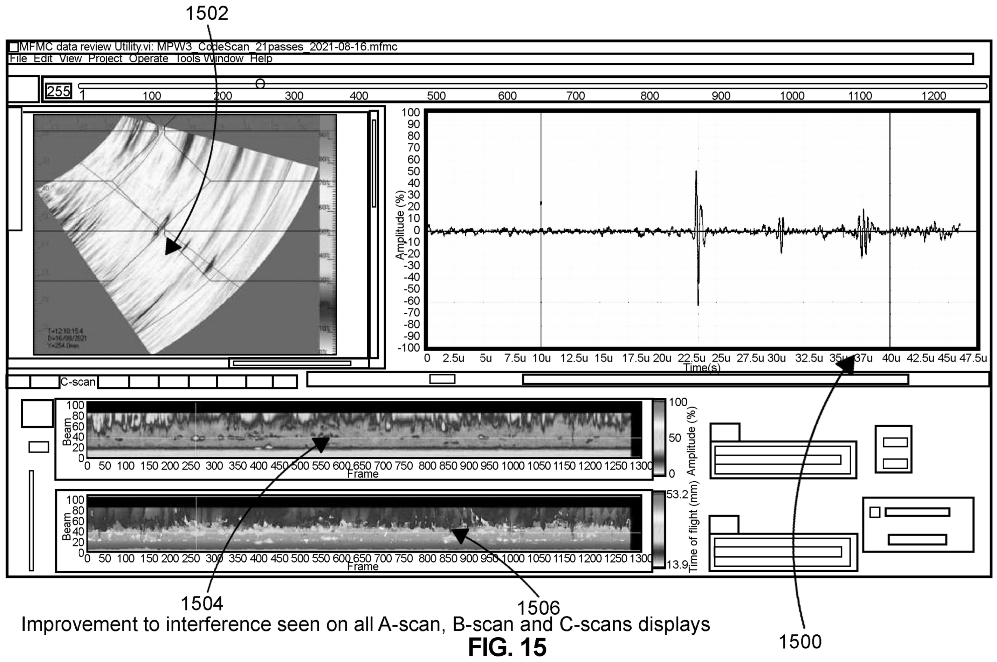

The position after processing is shown in Figure 15 and there is a clear improvement in each of the scans, namely processed scope display 1500, processed image 1502 and the amplitude trace 1504 and time of flight maps 1506 in the other scan too.

By using multiple transmissions and selecting the minimum rectified value on a sample by sample basis, good accounting for any interference is provided.

The comparison of the processed results with the acquired data streams, signal traces, produces a selector waveform that shows which sample came from which stream. The selector can be used o the original RF streams to create the processed RF stream and thereby allow for FMC data acquisition and processing.

In cases, where no interference is detected (the range of values across the stream is small) the selected processing is less computationally intensive in just using an average sample. At the same time, where interference is detected, the processing can select an alternative manner of processing to provide a minimum sample value approach and so deal with the potential impact of interference successfully.

Increasing the number of transmissions that are considered allows the approach to account for and deal with a larger number of asynchronous sources of interference.

The range of approaches offered by these embodiments are useful when interference prevention or suppression are insufficient.

## Further Disclosures

This further disclosure concerns improvements in and relating to welding, quality control in welding and to methods of use thereof, based upon the use of multiple sensor types and combinations of data from those.

During welding, a significant number of variables exist which impact upon the formation of the weld and the quality of that weld. Attempts have been made to monitor individual variables during welding to detect deviations in those and potential impaired quality welding and/or defect generation as a result. As a weld is formed and immediately after formation, the weld has various characteristics. Attempts have been made to determine individual characteristics during welding to detect deviations in those and potentially impaired quality welding and/or defect generation as a result.

Amongst the potential aims of the disclosure is to provide a method of welding and verification of quality in which increased benefits are obtained by making greater use of variable monitoring and/or characteristic determining to mitigate against welding defects forming or other quality issues arising. Amongst the potential aims of the disclosure is provide a method of welding and verification of welding conditions which seeks to synchronise and fuse data from multiple sensor types and/or sources so as to obtain more information than the sum of the parts. In addition, potential benefits may be provided from seeking to analyse each of the data types in a more informative manner.

Reference is made to the seventh to twelfth aspects of the invention above.

The following provides a description relating to those aspects.

In is known to conduct non-destructive testing (or examination), NDT, of welds after they have formed and cooled to see if any defects are present. Remedial action can then be taken on any defects found. Such NDT is however, conducted in the prior art a long time after the weld is formed and so the information on defects is provided a long time after the event and so is too late to prevent the defect formation or to mitigate further defect formation.

During welding, a significant number of variables exist which impact upon the formation of the weld and the quality of that weld. These may include: wire feed speed, voltage, current, welding speed, welding device to welding location separation, shield gas, shield gas flow rate, substrate shape/profile/configuration/dimensions, pre-heating temperature for the substrate, welding groove shape/profile/configuration/dimensions, weld or weld pass shape/profile/configuration/dimensions.

Attempts have been made to monitor individual variables during welding to detect deviations in those and potential impaired quality welding and/or defect generation as a result.

As a weld is formed and immediately after formation, the weld has various characteristics. These may include: acoustic emissions from the welding location and/or arc, the topology of the weld formed, the visual characteristics of the weld as it is formed and/or after formation.

Attempts have been made to determine individual characteristics during welding to detect deviations in those and potentially impaired quality welding and/or defect generation as a result.

*Overall Process*

The present disclosure seeks to obtain increased benefits in welding by making greater use of variable monitoring and/or characteristic determining to mitigate against welding defects forming or other quality issues arising. The disclosure also seeks to synchronise and fuse data from multiple sources so as to obtain more information than the sum of the parts. In addition, the disclosure seeks to analyse each of the data types in a more informative manner.

The disclosure also reduces the risks of defect formation through improved initial weld quality. This is achieved by an enhanced range of data types relating to the welding that are collected, analysed and employed as the welding progresses.

The disclosure makes use of data derived from multiple sensors and/or sensor types processed in real time with machine learning / artificial intelligence algorithms being used to derive near real time decision making for weld process control. Thus. the decisions benefit from the involvement of the multiple different sensor types.

In the exemplified disclosure, four different sensor types are used to collect data from use in combination and to provide adaptive control capability for the welding and hence mitigate the chance of defect formation. However, the methodology is suitable for handling greater numbers of sensor types or data types and is also suitable for use with different sensor types to those exemplified.

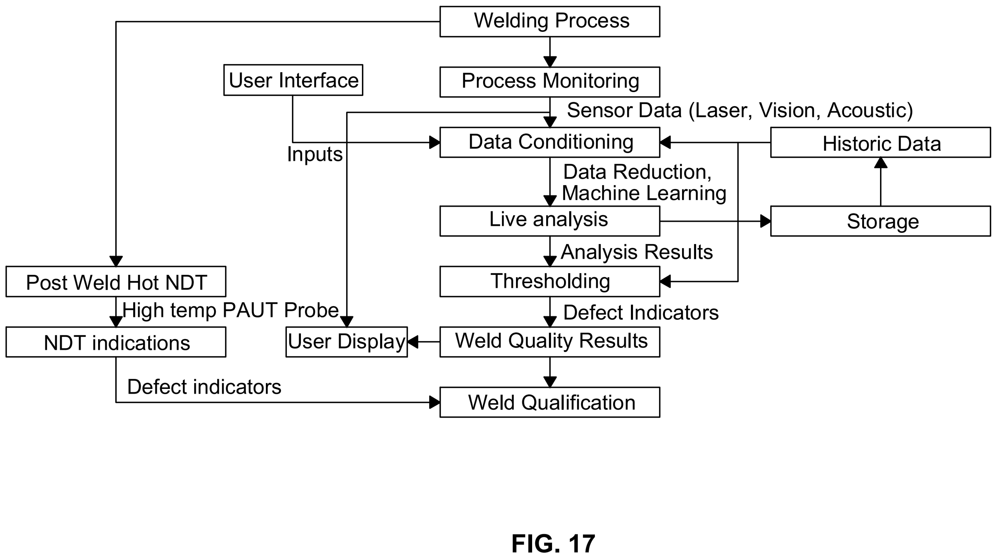

Referring to Figure 17, a schematic illustration of the adaptive control capability is provided.

The *Welding Process* is where a series of variables which influence and control the welding are defined and controlled. These may include: wire feed speed, voltage, current, welding speed, welding device to welding location separation, shield gas, shield gas flow rate, substrate shape/profile/configuration/dimensions, pre-heating temperature for the substrate, welding groove shape/profile/configuration/dimensions, weld or weld pass shape/profile/configuration/dimensions.

Within the *Welding Process,* on the left-hand side of Figure 17, an NDT step [*Post Weld Hot NDT*] is conducted using a high temperature compatible roller type ultrasound probe [described in further detail below] and this step provides the ultrasound data [*NDT Indications*] which are fed to the overall assessment of *Weld Qualification* which provides the end of the process.

As well as that monitoring of the weld produced and prompting any remedial action on that, the *Welding Process* leads to a parallel series of steps commencing with *Process Monitoring* that seek to prevent or minimize the extent of defects arising.

In the *Process Monitoring* step, data on the applied voltage and current with time for the welding device is measured and collected. Sensing of voltage and current is used in this embodiment to consider correct weld formation, or issues in correct weld formation.

The data from three other sensor types are feed into the data stream at this point to form the *Sensor Data.* These are *Laser, Vision* and *Acoustic* data streams from appropriate sensors of that type described in more detail below. Sensing of weld profile using laser scanning, visual assessment of the weld and acoustic sensing of the sounds originating from the weld are also used in this embodiment to consider correct weld formation, or issues in correct weld formation.

The process sequence includes the collection of the *Sensor Data,* through the use of *Laser, Vision* and *Acoustic* data streams. In addition, the *Process Monitoring* step collects data on the applied voltage and the current for the welding device. The *Post Hot Weld NDT* also provides the *NDT Indications;* a fifth data type. These form the full data stream that is considered. Each of those sensor types and the data type they provide are now considered. The different sensor types are:

- Phased Array Ultrasound sensor type - measuring weld quality;
- Acoustic sensor type - deriving weld process performance from the sound of the welding arc;
- Laser sensor type - monitoring the topology of the weld;
- Visual monitoring type - replacing the operator eyesight in visualisation of the weld pool;
- Voltage and current monitoring type - measuring the power to maintain the welding process in its optimum state.

*Ultrasound sensor type*

This sensor type is concerned with the results from the weld produced, whereas the other sensor types are more focused on the weld as it is produced. Thus, this sensor type provides information on the need for remedial action, whereas the later sensor types described below can be used to mitigate the generation of defects in the first place.

The ultrasound sensor type includes a transducer which provides a 5Mhz 64 element phased array that is mounted to generate 55° ultrasound waves into the substrate. A 0.5mm pitch and 10mm elevation can be used. An angled beam is beneficial in being able to inspect the weld fully from a laterally spaced location. Frequently, that laterally spaced location will be more amenable to good contact between the probe and the object, that at the location where welding is occurring. For instance, in multi-pass welds, until the weld is completed, there will be a significant depression which will interfere with good contact and ultrasound propagation into the object. This is an issue with 0° or low angle-based approaches.

This type of transducer and an associated ultrasound conveying block configuration can be used to provide a sectorial scan beam defined by the upper extremity beam [angled away from the perpendicular to the transducer face] and the lower extremity beam [near perpendicular to the transducer face] emitted.

In terms of the performance sought for the probe on high temperature performance, the probes are capable of inspecting for prolonged period substrates that are at ≈300°C.

The coupling is dry but still achieves the necessary levels of ultrasound propagation through the interface into and back from the object.

The high-temperature polymer used in the coupling component is able to withstand prolonged contact with objects at such temperatures and still propagate the ultrasound to and from the interface successfully.

The coolant and hence the coolant filled gaps between elements of the sensor type are able also to effectively propagate the ultrasound waves to and from the conveying block.

Optimal propagation properties for the conveying block are provided as the block is exposed to near ambient temperatures only and so there is no need to choose high temperature resistant materials which have lesser ultrasound propagation properties.

The sensor type also includes an integrated surface temperature measurement and a coolant temperature measurement sensor type.

*Welding location conditions and impact*

Arc welding uses a power supply to generate sufficient voltage difference between the electrode of the welding device and the substrate to be welded to produce an arc. A current results. The arc heats the substrate to a molten state [potentially with consumption of the electrode]. On cooling, the molten metal solidifies to join two substrates together.

The speed with which the welding device moves relative to the substrate has an impact upon the quality of the weld through impacting upon the extent of melting, shape of the melt pool and the like.

The welding location is usually protected by a shield gas to prevent oxygen, water or water vapour in the atmosphere reaching the welding location. Inert or semi-inert gases are typically used for the shield gases, examples include argon and helium. Flow rates for the shielding gas impact upon its ability to perform its role.

For the quality of the weld to be high, careful control of many operating variables is necessary within the welding process. These variables can be considered indirectly, as exemplified in the section below. Although not directly sensed in the exemplifying embodiment, further sensor types could measure speed of welding device movement, shield gas flow, shield gas flow rate and add those sensor types and their data sets to the processing.

*Acoustic sensor type*

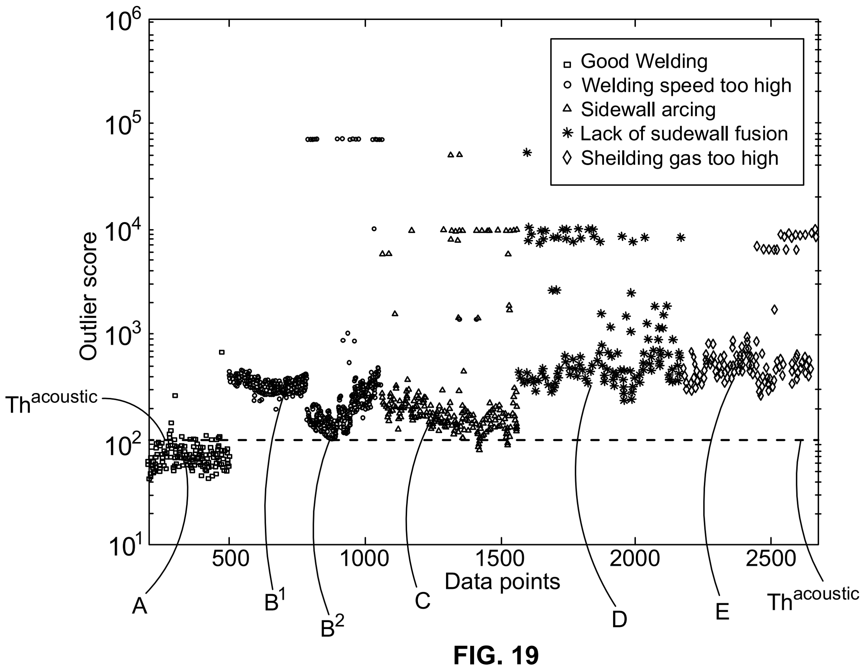

The acoustic sensor type collects high frequency audio signals that arise as the welding occurs. These come from the arc forming the weld and the interaction of the arc with the substrate and the interaction of the arc with the shield gas. The audio signals detected have been established to be sensitive to a number of important variables within the welding process. Referring to Figure 19, this shows examples for the values for outlier score for different welding characteristics.

The outlier score is obtained by a mathematical approach which considers how far a particular data value is from known set of data values, which have been classified as acceptable values for the characteristic and/or sensor type data being assessed.

One such approach, used in the disclosure, is the use of a Mahalanbis distance novelty detection model by comparing the incoming audio signal values to the previously developed Principal Component Analysis, PCA, model for the sensor type and its signal values and/or data values.

The signal processing includes taking the audio signal and applying a noise cancelling algorithm to the raw data. The audio signal is further processed by the use of a short-time Fourier transform to convert the raw time series of data into the frequency domain. Statistical features are then extracted from each of a series of bandwidths spanning the frequency range of interest. In the example, the bandwidth used is 39.1kHz and that yields 312 features describing the acoustic signal in a given instance of the signal. The total feature set [312 features for each signal instance] is then optimised by the removal of redundant features and then standardised to improve the robustness of the features with smaller standard deviations.

In the initial establishment of the PCA model, the signals and hence the remaining feature set arising from the processing above is established to be for acceptable performance of the welding with respect to that variable, in this case acoustic signals. Hence, the remaining feature set can be finally reduced using a PCA to give the model and the principal components that define that model in respect of acceptable performance of the welding.

The PCA model of acceptable performance can then be used to consider subsequent signals. Those subsequent signals are subjected to the same noise cancelling and other steps defined above. For each feature, a feature value position relative to the distribution of feature values for established acceptable weld performance and hence feature values is determined. A mean is calculated for the distribution and the feature value distance is measured relative to the mean. The distance provides the outlier quantification displayed in Figure 19 and so establishes variations in distance which are still consistent with acceptable welding conditions and establishes variations in distance which are more exceptional and so indicative of impaired welding performance.

The approach is beneficial in giving a unitless, scale-invariant quantification that takes account of the correlation of the feature values within the distribution. The mean can be recalculated as acceptable feature values are added to the distribution and/pr the PCA model or can be based upon a fixed set of pre-existing acceptable feature values used in a PCA model.

Referring to the example results obtained using this processing and displayed in Figure 19, the first set of data points are illustrative of good welding operating parameters occurring. These parameters where independently verified as applying. As can be seen these give a well clustered set of data points A, relative to the log scale outlier score axis.

The second set of data points are illustrative of too high a welding speed; that is the welding device and the substrate are moving too fast relative to one another. Two different welding speed deviations were demonstrated and these give two well clustered sets of data points $B^1$ and $B^2$, with few outliers.

The third set of data points are illustrative of sidewall arcing during welding; that is the arc is short circuiting to the side wall rather than to the desired welding location within the welding groove. Once again, these conditions give a well clustered set of data points C, with few outliers.

The fourth set of data points are illustrative of sidewall fusion; that is the arc is melting the sidewall and causing fusion there rather than in the welding groove. The data points are well clustered as data points D, with few outliers.

The fifth set of data points are illustrative of too high a flow rate for the shielding gas; this can cause porosity issues which are undesirable. As with the other sets of data points, this set E is also well defined with few outliers. A similar position can be detected with too low a flow rate for the shielding gas.

Each of the undesirable welding conditions mentioned, when present, gives a far higher outlier value or feature value than when good welding conditions are present. As a result, a threshold $Th^{acoustic}$ [a selected value for the Mahalabis distance] can be set and can be used to distinguish between acoustic sensor type derived data indicating good welding conditions or indicating impaired welding conditions. Thus, the acoustic data type has the ability to warn the operate, trigger a stop to welding or the like if the threshold $Th^{acoustic}$ is breached or remains breached for a given number of data points. Real-time acoustic signal-based identification of defect generation is thus provided. This analysis can be provided continuously and can be provided for each pass of a multi-pass weld approach.

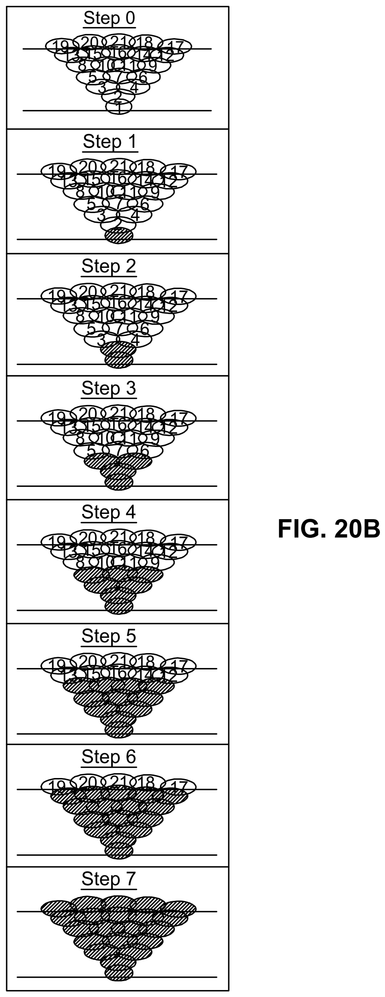

Significantly, the algorithm used is more complex that just the use of a single previously developed Principal Component Analysis, PCA, model for the sensor type and its signal values and/or data values. As seen in Figure 20b, in multi-pass welding, the weld passes gradually fill the weld groove. This means that the depth of the weld groove, the shape of the weld groove and the volume filled change with each pass. All of these and potentially other changes between passes impact upon the acoustic signals that are emitted and are detected. Thus, the approach uses a separate model for each pass so as to make the most accurate assessment of the observed data against the expected data for that pass.

The separate models could be obtained by a neural network approach to training based upon pre-existing passes or could be learned as the passes are made during operation with increasing number of each pass improving the model for that given pass in the sequence of passes.

The use of a separate model for each pass also extends to the use of separate models for repasses, for instance as a part of remedial work on the weld. The weld groove shape and hence the acoustics in such repass cases are significantly different from the ordinary passes.

*Laser sensor type*

The next sensor type employed is a visual one and this seeks to evaluate the geometry of the weld created.

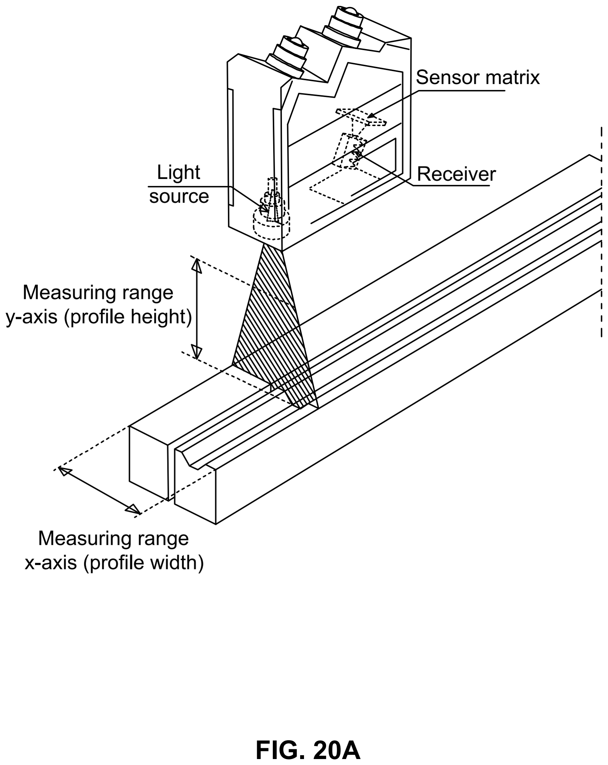

Figure 20a illustrates a section of substrate 2 with a weld 20 formed on it. The weld 20 is linear in this example, but other weld track can be considered in the same way. A visual sensor type device 22 includes a casing 24 within which is provided a light source 26 which can illuminate the substrate 2 and the weld 20 across an illuminating width 28. The device 22 has an operating range 30 within which accurate imaging is possible. Light returns to the device 22 where a receiver 32 focuses the light onto a senor matrix 34 and signals are generated. In this example a 2D laser profile scanner is used, by other types can be substituted.

The laser as the light source 26 is used to establish various details of the weld and surrounds, including the weld profile, groove profile remaining, weld bead width and any material deposited outside of the weld groove. A plane perpendicular to the substrate surface beside the weld groove and perpendicular to the longitudinal axis of the weld groove may be used for the inspection. In addition, the weld bead profile along the weld groove may be considered.

Figure 20b is an illustration of a typical welding groove during the course of a sequence of welding passes. Each weld pass adds a weld to the welds already present in the groove, in a predetermined sequence [as numbered] to build up the overall weld. As can be seen, the weld passes contribute a predictable geometry for the weld pass itself and a predictable change in the geometry of the weld groove, if welding is proceeding correctly.

The signals from the device 22 can be used to form a profile image across the weld track with each position along the weld track. That actual profile can be compared with an expected profile and deviation noted. The deviation can be compared with a threshold $Th^{profile}$. Thus, the profile data has the ability to warn the operate, trigger a stop to welding or the like if the threshold $Th^{profile}$ is breached or remains breached for a given number of data points. Real-time profile signal-based identification of defect generation is thus provided. This analysis can be provided continuously and can be provided for each pass of a multi-pass weld approach. Effective geometric verification is provided.

*Visual sensor type*

In the next sensing area, a high dynamic range camera is used to obtain images of the welding location, including the location where a weld has not yet been formed, the location where the weld is being formed and the location where the weld is solidifying and then cooling further.

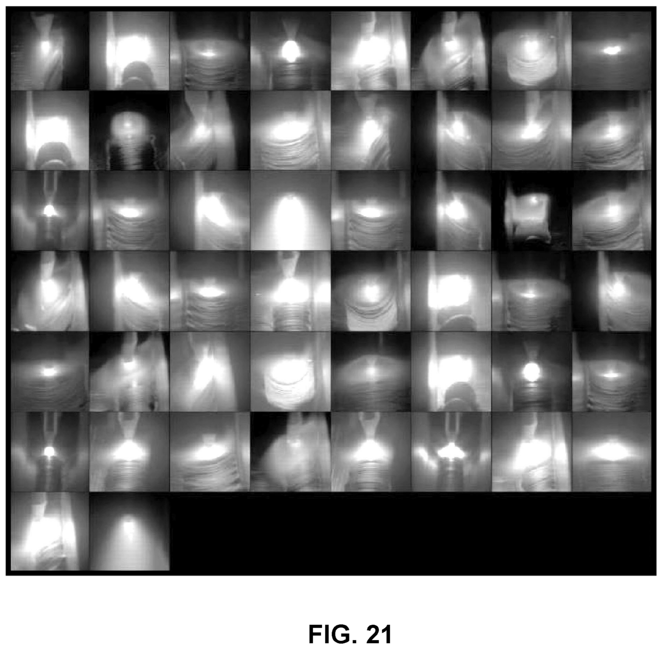

Figure 21 shows a series of images of this type collected from different weld locations. Processing of these using combinations of artificial intelligence and conventional machine vision tools, the system can detect the changes in the images that correlate to abnormal welding conditions or the generated visual anomalies caused by defects. This may be achieved using the processing of single images, or a combination of multiple images from prior data, both from recent images, and historical parts and passes.

One or more variables may be considered in this area, for instance, the weld pool size [width, trailing length, leading length], weld pool geometry [elliptical, teardrop or others], weld pool temperature can be considered, along with analysis on the patterns, shapes of deposited material and visible anomalies. A profile of known judgement parameters for different types of defects may be used to compare the live outputs from each part of the algorithm against known-good values. These values may be a combination of, presence or absence of a specific visual feature, a numerical band or a threshold value, or a classification. Should the image meet be deemed to exceed these parameters, the situation occurring for one or more or all of those can be compared with the desired position for one or more or all of those and a deviation can be used again to trigger a warning or stopping of the welding.

*Voltage and current sensor type*

The voltage applied will impact upon the formation of the arc and the current within the arc. That in turn impacts the power and hence the rate of melting of the substrate [and if consumed the electrode]. These are important variables for the quality of the weld. These are variables which impact the weld pool size for instance.

The welding voltage also needs to be automatically and continuously adjusted to reflect the separation between the welding device and the substrate being welded. This is based upon the known and fixed position of the substrate and the variable but known X-Y-Z position of the robotic arm carrying the welding device, and hence the separation of the two.

The sensing system for the voltage and current monitoring is orders of magnitude faster than that incorporated in pre-existing automatic voltage control approaches. The power system is able to handle 500A and scale up to 1000A or more, whilst still providing voltage monitoring and current monitoring at the nano-second level between measurements. Hence, very detailed information of the voltage and current are obtained and even short-lived variations can be taken into account.

Input voltage and current, and hence input power, tends to be detected rather than output power to avoid the sensing/detecting itself disrupting the output power performance.

The data and hence the approach used for its processing is similar to that set out above for the acoustic sensor type.

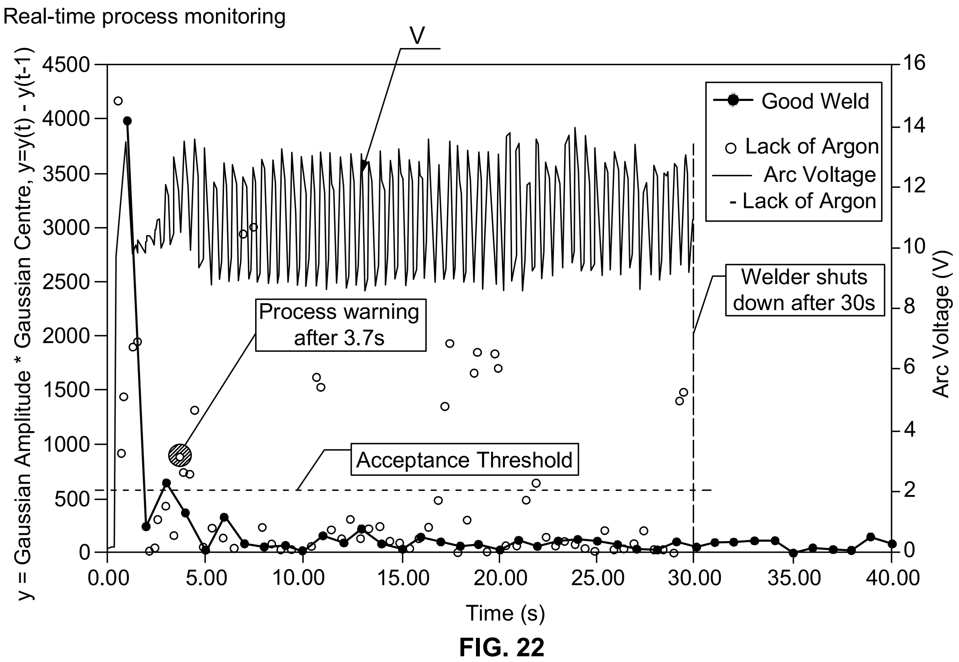

Referring to Figure 22, the arc voltage is plotted against time as plot V. In this example, the welding process was shut down after 30 seconds and so the voltage returns to zero.

Also plotted in Figure 22 is the value for Gaussian amplitude x Gaussian centre versus time. As can be seen, in the initial time period, the first 2 or 3 seconds, the value for this plot is higher than an acceptance threshold and so there would be concerns at the quality of the weld. After that initial 2-3 seconds, and certainly after 8 seconds onwards, the plot is appreciably below the threshold and quality welding is being indicated with respect to this variable set.

In addition to these variables, Figure 22 also includes indications of when low argon as the shield gas is present. The indication shows the occurrence of low argon by being a plot point and also shows the extent to which the argon is missing through the vertical position of the plot point.

*Overall Process - Continued*

Returning again to Figure 17, having established the specifics by which the sensor types operate and their data is considered, the process and the data within it goes through a *Data Conditioning* step. The *Data Conditioning* is provided based upon *Inputs* provided through a *User Interface* and/or based upon *Historic Data* obtained from *Storage*. The *Storage* may contain data from earlier in this weld's conduct and/or data from a large number of previous welds conducted by the system and/or data from other systems [for instance from calibration processes or the like], all of which can contribute to the *Historic Data* and hence to the *Data Conditioning.*

In the *Live Analysis* step two different levels of processing may be implemented.

The first level of processing provides for the synchronization of data types from different sensor types. This synchronization can accommodate not only the different data types from the different sensor types exemplified above by means of the different sensor types, but also any number of other sensor types introduced and used to measure key characteristics relating directly and/or indirectly to the welding system and the welds arising.

A Programmable Logic Controller, PLC, is used to temporally synchronize the different data types by the provision of a master timestamp at the initiation of data collection from the sensor types within the system. The PLC also continually checks that each sensor of each sensor type within the system is continuing to provide data and that the data provided is collected at a consistent rate. Periodic further master time stamps may be applied during the data collection process as it progresses.

The master timestamp means that the data collected from the microphones acting as the sensor type for the acoustic analysis, input power analysis to measure the draw during welding, area scan cameras to provide the vision system and laser profile scanner which provides the 3D profile sensor type can all being aligned to represent data from the same time and hence the same position within the weld.

Significantly, the PLC also receives data from an incremental encoder which provides position data. The encoder can be mounted on the substrate being welded and/or on the welding device and indicates the physical position of that encoder at that time. The encoder triggers data collection and provide consistent correlation of sensor data to the weld position on the component. Again, the data from the encoder has the same master timestamp applied. This means that the actual position is known for the established same position applicable at the same time in the alignment of the synchronized data. The data is synchronized temporally and spatially.

This processing enables the sensor data that is collected at different locations on the component to be post processed into one cohesive data structure, with the raw sensor data, the post processed information and the output of the analysis to be correlated to the physical position of the weld. This data can then be displayed to the operator within the user display, allowing them to make adjustment to the welding process based on the output of the system.

The second level of processing is implemented by the application of *Data Reduction* and/or *Machine Learning.* This second level of processing takes this correlated data and then feeds it to a secondary layer of processing and analysis (by use of machine learning or other appropriate analysis method) to correlate any number of features from both the raw data and the output of the sensor type level analysis to welding defects. In effect, a machine learning supported decision engine is employed.

Within the method, a general assessment is being made as to whether, where a defect is suspected of a location, that defect is within acceptable characteristics, such as size, or exceeds those acceptable characteristics and is thus a defect that needs noting or remedial action. When NDT type sensing is conducted, then a direct measurement of the defect is made by virtue of the imaging conducted. This reports directly on the size and potentially other characteristics of the defect. However, where the consideration of defects is based upon the welding conditions occurring during the welding, the potential defects are being considered indirectly; the question "are these conditions likely to lead to a defect?" is being considered. The second level of processing offers to make improved determinations on acceptable and/or unacceptable welding in this context.

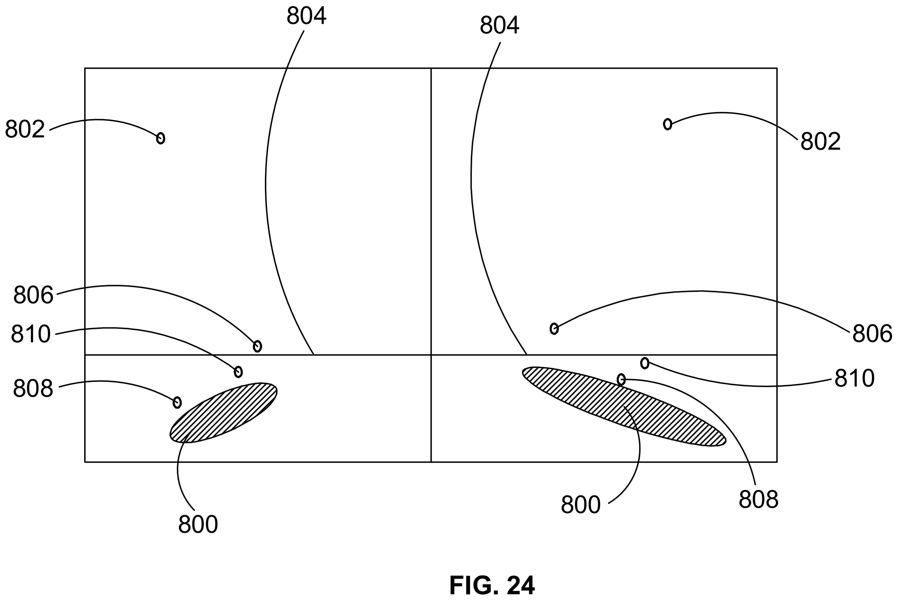

Referring to Figure 24, two different sensor types are being considered, Type A on the left-hand side and Type B on the righthand side. The two sensor types could be any of the sensor types mentioned herein and/or other forms of sensor type which provide data on the weld's conduct or weld outcome.

Referring to the Type A sensor type, there will be a series of data points within area 800 which are firmly established as indicative of acceptable welding. These may be established from test runs verified by other sensing and/or NDT or may be modelled cases.

There will also be data points from welding, such as data point 802, which are clearly outside of that acceptable area and also a long way on the unacceptable side of a threshold 804 that may be applied in making a first determination on whether a data point is indicative of acceptable or unacceptable welding. Other data points, such as data point 806, are above the threshold and also deemed unacceptable with that definition of the threshold 804.

The difficult to interpret instances are data points, such as data points 808 and 810, which are outside the area 800 but under the threshold 804. A call based upon the single sensor would result in these being deemed acceptable welding as they are below the threshold.

Gains are to be made by the second level of processing which considers the data points [802, 806, 808, 810] across more than one sensor type to reach the full determination. Referring to the righthand side and the Type B sensor type, the data point 802 again lies within the established acceptable welding area 800. Similarly, the data point 806 is well beyond the threshold 804 and once again from this sensor type alone is indicative of unacceptable welding.

Turning to the data points 808 and 810, again, both are outside of area 800, but under threshold 804. Under a single sensor type approach, these edge cases, would again be deemed acceptable welding. However, the second level of processing obtains additional information by considering the position across the multiple sensor types.

Two approaches to the consideration of the position across multiple sensor types can be employed using neural networks. These two approaches can be used as alternatives to one another or one may be use in parallel or used in series with the other.

In the first approach, labelled data is provided and supervised learning is involved. The labelled data can come from either or both of two sources. Firstly, particularly during an early stage of the processing, for instance during calibration or during early production welding runs, the labelled data may be obtained from experimental results. So, continuing with the Figure 24 example, the position for both points 808 and 810 may be flagged to an operator for an operator- based assessment of acceptable or unacceptable. The operator is provided not just with the data from a single sensor type to consider and make a call on, but rather is provided with flagged data from multiple different sensor types on that data [data points or a sequence of data points] and so a more nuanced position from which to make a determination call. The outcome is used to label the data and is thus available within the pool of data that the neural network learns from. The human knowledge and interpretation are fed to the neural network by the user's determination and so the supervision is provided.

The second manner for providing the labelled data is to make use of a library of existing data. Again, this data is labelled as to the determination and has the necessary transfer of operator knowledge. The library would be fed to a neural network classifier to establish the processed position for the library data set. The library would cover data from multiple sensor types and thus allow determinations of the second level of processing type; the data point position across multiple sensor type inspection and results. A classifier score could then be determined for any data point relative to that classifier library data and in turn a probable error for a data point [or series thereof] to be examined and a determination to be made on could be quantified. Classifiers can use Bayes theorem-based approaches for the classification and the error quantification.

The second manner, the library, may be used as the starting labelled data set. The conduct of the first manner, calibration or test runs on the actual welding system with operator calls, can be used as an alternative from the outset. However, the first manner can be used to add to the second manner data set and so advance the neural network learning from a more general welding system position to a position more tailored to that particular welding system.

Returning to Figure 24, the operator might determine data point 808 to be sufficiently close to the acceptable area 800 to be deemed acceptable but might deem the data point 810 so close to the threshold across the multiple sensor types that it is not acceptable. That might lead to the neural network providing a minor adjustment to the acceptable area 800 and/or the threshold 804 [value or format]. Over time, repeated determinations of this type could lead to a more pronounced and optimised revision of the bounds of the acceptable area 800 and/or of the threshold 804. For instance, the acceptable area 800 might be expanded and/or the threshold might be tightened. The same results as data points 808 and 810 at a later more advanced learning stage for the process might be called acceptable and unacceptable respectively because of where they sit, within the revised acceptable area for data point 808 and over the revised threshold for data point 810.

An example of such an analysis in a real-world scenario might be that the left-hand side relates to a visual image sensor type and one or more images in succession suggest that there is an issue with side wall proximity for the welding. Consideration of an acoustic sensor type as the righthand side could also suggest a side wall proximity issue and thereby verify an overall determination that the welding was not acceptable.

Whilst the above examples refer to the position from a sensor type and other sensor types giving a determination of acceptable or not acceptable, the determination may be more detailed than that and give a determination of the nature of the problem with the welding conditions. Thus, the data from two sensor types may inform on the nature of the problem, when the data from one sensor type alone might just suggest a problem.

An issue to note, is that the importation of historical data from other welding situations and environments is not a strong starting place for a library from which to judge acceptable welding performance. This is because other welding operations and other welding environments have a wide range of other variables which could have affected the data from those welding operations. For instance, in the context of the visual imaging type sensor, the lighting and lighting angle in that welding environment, the nature of the substrate, the welding torch angle and separation and the like can all influence the data and so that data would not be consistent with that to be looked for in another environment with different lighting, for example.

As an alternative, or additional to this first approach using labelled data and supervised learning, it is possible to reduce or avoid the need for library type data and/or supervised learning, by making use of the ability of neural networks to conduct clustering or grouping based processing [looking for similarities and/or anomalies in the data]. Various techniques, such as K-means clustering exist which enable centroids for clusters to be established and degrees of certainty with distance established around those. Multiple other clustering approaches apply. These could be sued to establish the acceptable area 800 and/or threshold 804 position and modify it with increased data and learning, without the need for a large library of labelled data to start with.

As mentioned previously, the first approach and second approach can be used in combination with one another, as well as being alternatives. Thus, the first approach could be used to start the neural network off on its learning and then the second approach could take over after the first approach has advanced the learning. It is also possible for the neural network to be learning from both the first approach and the second approach at the same time so as to maximise the data fed, particularly where the library is being extended from ongoing welding in other welding systems besides the particularly welding system under consideration. It would also be possible to pool the learning from similarly configured and operated welding systems.

Overtime, particularly when the method is used in production version conducting large amounts of welding, then the amount of data, the precision of the assessments and the complexity of different cases for the data which can be successfully assessed increases.

Any and all of the outcomes from the *Live Analysis* of the data and/or *Data Reduction* and/or *Machine Learning,* once obtained can have copies fed to the *Storage* for future use or to contribute to the knowledge of the system and/or similar systems.

A key step in the Analysis Results is the data value or position compared with one or more thresholds set for the data type, *Thresholding.* Examples of approaches on thresholding are provided in the different sections on the specific sensor types exemplified, but are broadly applicable to each sensor type and the data type it generates. The position relative to a threshold may be deemed indicative of a defect, *Defect Indicators,* and hence be a key part of the *Weld Quality Results* which in turn are displayed to the user via *User Display,* which also receives and displays the *Sensor Data* received.

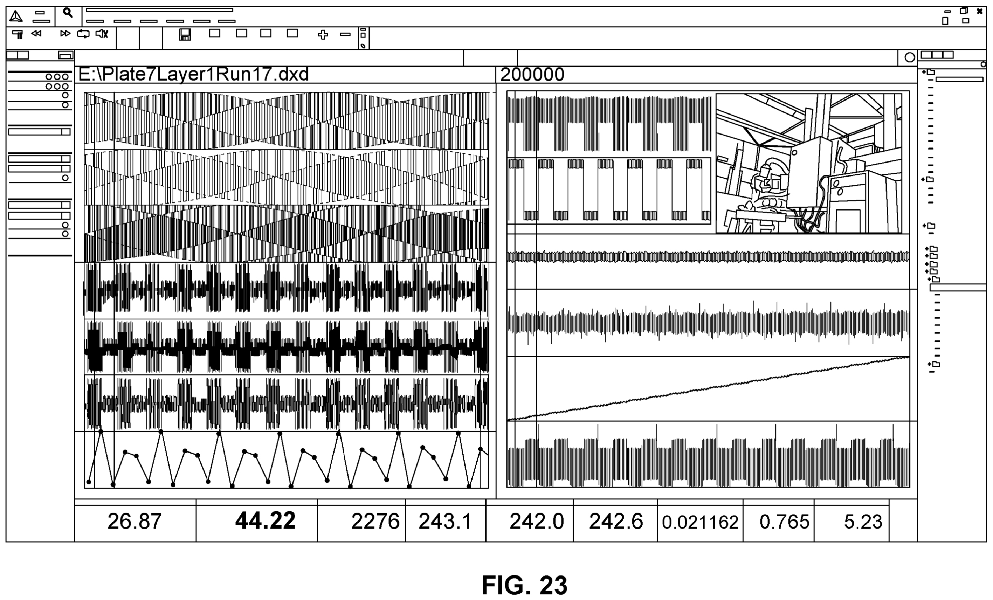

Figure 23 is an example of a *User Display.* The *User Display* can give the real time output of all of the sensor type analysis allowing them to review the welding process as it occurs and adjust the process if the output of the analysis flags any welds of poor quality. In addition, they will be able to review the overall weld data after each pass and interrogate the data to discern any areas that require remediation or adjustment before or during the following welding to occur.

The *Weld Quality Results* step can, on encountering an unacceptable weld, stop the welding process and/or provide an alert to an operator, for instance via *User Display.*

Based upon the *User Display* position, the operator or even the system itself may adjust one or more variable parameters used to control and conduct the *Welding Process* in real time.

The Weld Quality Results feed through to the Weld Qualification provided for the weld overall. Where a defect is identified by the NDT, then the size and position of the defect are cross-checked with appropriate standards to ensure that the defect is acceptable at that level. If not, remedial action is taken. If acceptable, then a 3D lifetime record of the data is kept within the *Weld Qualification* so as to be available through the life of the weld and into any necessary decommissioning support.

*Processing and storage of data*

In addition to the consideration of each data type individually, there are further advantages to be gained from considering the data types as a combined data stream. To enable this, each of the data sets is time stamped and so that allows all of the data sets to be time synchronised by synchronising the time stamps.

This means that all of the data sets can be combined and then saved as a single data file. This also provides for reuse at a subsequent time.

Further aspects of the invention will be described with reference to the following numbered clauses.

1. A method of providing an inspection of a weld, the method comprising:

a) providing weld inspection apparatus in proximity with a weld on a substrate to be inspected;
b) conducting the inspection, wherein the substrate is provided at an elevated temperature state above ambient temperature by heating during the inspection, the conducting of the inspection including:

a. emitting an ultrasound wave into a volume of the substrate and weld;
b. receiving at least a part of the ultrasound wave back from the substrate and weld, thereby acquiring multiple signal sets;

c) processing one or more of the multiple signal sets to provide weld inspection data;

wherein the processing includes a correction for temperature distribution within the volume of the substrate and/or the weld, at the elevated temperature.

2. The method of clause 1, wherein the correction includes, the path of at least a part of the ultrasound wave into the volume of the substrate and weld being corrected to give a corrected path.

3. The method of clause 3, wherein the part of the ultrasound wave has path characteristics in a media element before the part of the ultrasound wave enters a first element of the substrate, the first element has a temperature within the temperature distribution for the volume of the substrate and/or weld, temperature-corrected path characteristics being determined for the part of the ultrasound wave **in** the first element, the temperature-corrected path characteristics being based upon the change **in** temperature between the media element and the first element.

4. The method of clause 2 or clause 3, wherein the part of the ultrasound wave has path characteristics **in** a first element of the substrate, the first element has a temperature within the temperature distribution for the volume of the substrate and/or weld, the path characteristics taking the path of the part of the ultrasound wave to a second element, the second element has a temperature within the temperature distribution for the volume of the substrate and/or weld, temperature-corrected path characteristics being determined for the part of the ultrasound wave **in** the second element, the temperature-corrected path characteristics being based upon the change in temperature between the first element and the second element.

5. The method of clause 4, wherein temperature-corrected path characteristics are determined for each element that the part of the ultrasound wave passes through in the substrate and/or weld.

6. The method of any of clauses 3 to 5, wherein the change in temperature is expressed as a change **in** the speed of sound between the speed of sound in one element and the speed of sound in the next element.

7. The method of any preceding clause, wherein a plurality of different parts of the ultrasound wave into the volume of the substrate and weld are corrected to give a corrected path.

8. The method of any preceding clause, wherein a region of interest is selected, the region of interest being within the volume of the substrate and weld that the ultrasound wave has passed through, the region of interest being sub-divided into locations, such as pixels, the method applying a correction for a location, such as a pixel.

9. The method according to any preceding clause, wherein the method includes a correction for one or more locations, such as pixels, that emitted ultrasound beams do not pass through based upon the calculated or observed correction for a location that an emitted beam does pass through.

10. The method of clause 9, wherein the correction is based upon the calculated or observed position for a plurality of locations on a first emitted beam and a plurality of locations on a second emitted beam.

11. The method of clause 8, clause 9 or clause 10, wherein the correction for a location is a weighted combination of the correction for one or more other locations, for instance one or more other locations that an emitted beam has passed through.

12. The method of any of clauses 8 to 11, wherein the correction for a location is weighted according to the fraction of the distance, between a location on the first beam and a location on the second beam, that the location occurs at.

13. The method of any of clauses 8 to 12, wherein the correction for a location is weighted according to the fraction of the distance, between a first location on the first beam and a second location on the first beam, that the location occurs at.

14. The method of any preceding clause, wherein the results set includes one or more measured indications of geometry of the substrate and/or weld groove and/or weld, wherein the method further includes a comparison of the measured indications of geometry with a modelled indications of geometry, wherein if the comparing of the measured indications of geometry with the modelled indications of geometry establishes that the measured indications of geometry is a sufficient fit for the modelled indications of geometry, accepting the imaging of the region of interest.

15. The method of any preceding clause, wherein the results set includes one or more measured indications of geometry of the substrate and/or weld groove and/or weld, wherein the method further includes a comparison of the measured indications of geometry with a modelled indications of geometry, wherein if the comparing of the measured indications of geometry with the modelled indications of geometry establishes that the measured indications of geometry is an insufficient fit for the modelled indications of geometry, the temperature distribution used in the correction for temperature distribution within the volume of the substrate and/or the weld, at the elevated temperature is redetermined.

16. The method of any preceding clause, wherein the method includes providing a thermal model and generating, using the thermal model, a modelled temperature distribution position for at least a part of the substrate, with the elevated temperature state, the part of the substrate including the volume.

17. The method of clause 16, wherein the method includes measuring the temperature at a plurality of locations, with the substrate at the elevated temperature, to obtain a measured temperature distribution position, the method further including comparing the measured temperature distribution position with the modelled temperature distribution position.

18. The method of clause 16 or clause 17, wherein the method further includes, if the comparing of the measured temperature distribution position with the modelled temperature distribution position establishes that the modelled temperature distribution is a insufficient fit for the measured temperature distribution, revising the thermal model and/or the modelled temperature distribution position and re-comparing.

19. The method of clause 16, clause 17 or clause 18, wherein the method further includes, if the comparing of the measured temperature distribution position with the modelled temperature distribution position establishes that the modelled temperature distribution is a sufficient fit for the measured temperature distribution, calculating a characteristic of the emitted ultrasound during transit of at least a part of the substrate and/or weld.

20. Apparatus for providing an inspection of a weld, the apparatus comprising:

a) weld inspection apparatus, in use provided in proximity with a weld on a substrate to be inspected, wherein the substrate is provided at an elevated temperature state above ambient temperature by heating during the inspection;
b) the weld inspection apparatus being adapted to:

a. emitting an ultrasound wave into a volume of the substrate and weld;
b. receiving at least a part of the ultrasound wave back from the substrate and weld, thereby acquiring multiple signal sets;

the welding apparatus include one or more processors, including a processor with inputs for one or more of the multiple signal sets, the processor providing a correction to the inputted one or more of the multiple signal sets to provide corrected weld inspection data, wherein the processor applies a correction for temperature within the volume of the substrate and/or the weld, at the elevated temperature.

21. A method of welding, the method of welding comprising:

a) providing welding apparatus;
b) providing a plurality of sensor types;
c) defining a first set of welding conditions for the welding method;
d) introducing one of more substrates to be welded to the welding apparatus;
e) conducting welding of the one or more substrates;
f) obtaining data from the plurality of sensor types during welding;
g) providing a correlation between the data obtained from at least two elected sensor types in the plurality of sensor types;
h) synchronising one or more data points in the data obtained from one of the at least two elected sensor types with one or more data points in the data obtained from another of the at least two elected sensor types;
i) comparing the obtained data from the plurality of sensor types with reference data for one or more of the sensor types;
j) based upon one or more such comparisons, determining whether the welding is of acceptable quality or unacceptable quality;
k) where, if the welding is of unacceptable quality, the method includes then taking one or more actions.

22. A method according to clause 21, wherein the correlation is a temporal correlation and a positional correlation.

23. A method according to clause 21, wherein the correlation is a temporal correlation.

24. A method according to any preceding clause of clauses 20 to 23, wherein the data from the at least two elected sensor types include a time of occurrence for one or more data points within the data, and wherein the correlation is a matching time of occurrence for data points in the data from the at least two elected sensor types.

25. A method according to clause 24, wherein the time of occurrence is obtained relative to a timestamp introduced into the data from an elected sensor type for each of the two or more elected sensor types providing a correlation.

26. A method according to clause 25, wherein the time of occurrence is obtained directly from a timestamp at that time.

27. A method according to clause 25 or clause 26, wherein the time of occurrence is obtained by the time elapsed since the timestamp and the time of the data point.

28. A method according to clause 21, wherein the correlation is a positional correlation.

29. A method according to any preceding clause of clauses 21 to 28, wherein the data from the at least two elected sensor types include a position of occurrence for one or more data points within the data, and wherein the correlation is a matching position of occurrence for data points in the data from the at least two elected sensor types.

30. A method according to clause 24, wherein the position of occurrence is obtained relative to a position stamp introduced into the data from an elected sensor type for each of the two or more elected sensor types providing a correlation.

31. A method according to clause 25, wherein the position of occurrence is obtained directly from a position stamp at that position.

32. A method according to clause 25 or clause 26, wherein the position of occurrence is obtained by the time elapsed since the position stamp and the time of the data point.

33. A method according to any preceding clause of clauses 21 to 32, wherein the synchronising provides an overall data structure in which data points from the at least two elected sensor types are aligned in time and/or position with one another.

34. A method according to any preceding clause of clauses 21 to 33, wherein data points from the at least two elected sensor types are displayed to a user, with the data points align with respect to time of occurrence and/or position of occurrence.

35. A method according to any preceding clause of clauses 21 to 34, wherein the data from two or more of the elected sensor types and the correlated data from the at least two elected sensor types are displayed to a user and/or stored.

36. A method according to clause 35, wherein the determination as to whether the welding is of acceptable quality or unacceptable quality and/or wherein the one or more actions taken are displayed and/or stored.

37. A method according to any preceding clause of clauses 21 to 36, wherein the method includes providing a correlation between the data obtained from at least four elected sensor types in the plurality of elected sensor types.

38. A method according to any preceding clause of clauses 21 to 37, wherein at least one elected sensor type of the plurality of elected sensor types is a part of weld inspection apparatus and the method includes a step of inspecting the weld using the weld inspection apparatus.

39. A method according to clause 38, wherein the method includes a step of inspecting the weld using weld inspection apparatus to determine one or more characteristics of a defect.

40. A method according to clause 39, wherein the characteristics include one or more of size, position, defect type, defect shape or defect position relative to the geometry of the weld and/or relative to the length of weld with reference to the geometry of the weld and/or relative to the length of weld.

41. A method according to clause 39 or clause 40, wherein the method further includes a comparison of one or more of the characteristics with one or more standards, and further includes a determination of whether the weld with the defect meets a weld standard or does not meet the weld standard.

42. A method according to clause 41, wherein if the weld meets the weld standard, then a record for the weld is created and stored.

43. A method according to clause 42, wherein the method further includes that the record includes data from one or more of the plurality of sensor types.

44. A method according to clause 41, wherein if the weld does not meet the weld standard, one or more remedial steps are applied to the weld.

45. A method according to any preceding clause of clauses 21 to 44, wherein the at least two elected sensor types in the plurality of elected sensor types are weld conditions sensors and the method includes a step of inspecting the weld conditions using the weld condition sensors.

46. A method according to clause 45, wherein the method includes a step of inspecting the weld conditions to determine one or more parameters of the weld as it is formed.

47. A method according to clause 46, wherein the method further includes a comparison of one or more of the parameter with one or more control parameters, and further includes a determination of whether a risk level for weld defects is exceeded.

48. A method according to any preceding clause of clauses 21 to 47, wherein the method further includes the one or more actions being to alter the welding conditions from the first set of welding conditions for the welding method.

49. A method according to clause 48, where the alteration in the welding conditions from the first set of welding conditions is to stop welding and/or alert an operator.

50. A method according to clause 48 or clause 49, wherein the alteration in the welding conditions from the first set of welding conditions is to change the welding conditions back to the first set of conditions and/or to change the welding conditions to a second set of conditions.

51. A method according to any preceding clause of clauses 21 to 50, wherein at least one of the at least two elected sensor types are selected from: voltage sensors, current sensors, welding arc sound emission sensors, weld topology sensors, weld imaging sensors and ultrasound imaging sensors.

52. Apparatus for monitoring welding, the apparatus comprising:

a) a plurality of inputs for data from a plurality of sensor types;
b) one or more processors, wherein a processor from amongst the one or more processors:

a. receives the inputs;
b. processes the data obtained from at least two elected sensor types amongst the plurality of senor types to apply a correlation between the data obtained from at least two elected sensor types amongst the plurality of senor types;
c. processes the data obtained from at least two elected sensor types amongst the plurality of senor types using the correlation to synchronise one or more data points in the data obtained from one of the at least two elected sensor types with one or more data points in the data obtained from another of the at least two elected sensor types;

c) one or more outputs for processed data.

53. Apparatus according to clause 52 or any clause depending thereon, wherein the processor is adapted to provide a temporal correlation, the output data from the processor including temporal information **in** the data from the one of the at least two elected sensors and temporal data **in** the data from the another of the at least two elected sensor types in the data.

54. Apparatus according to clause 52 or any clause depending thereon, wherein the processor is adapted to provide a positional correlation, the output data from the processor including positional information in the data from the one of the at least two elected sensors and positional data in the data from the another of the at least two elected sensor types in the data.

55. Apparatus according to clause 52 or any clause depending thereon, wherein the processor is adapted to provide in the data from the at least two elected sensor types, a time of occurrence for one or more data points within the data, and wherein the correlation is a matching time of occurrence for data points **in** the data from the at least two elected sensor types.

56. Apparatus according to clause 52 or any clause depending thereon, wherein the processor is adapted to provide in the data from the at least two elected sensor types, a position of occurrence for one or more data points within the data, and wherein the correlation is a matching position of occurrence for data points **in** the data from the at least two elected sensor types.

57. Apparatus according to any of clauses 52 to 56, wherein inputs are from at least one of the plurality of sensor types, potentially at least one of the elected sensor types, wherein the sensor types and/or elected sensor types are selected from: voltage sensors, current sensors, welding arc sound emission sensors, weld topology sensors, weld imaging sensors and ultrasound imaging sensors.

**Claims**

1. A method for detecting electromagnetic interference in ultrasound imaging of a substrate, comprising the steps of:

   using an ultrasound transducer to send out a plurality of ultrasound signals into a substrate, wherein the plurality of ultrasound signals are separated in time by a pulse repetition period;
   detecting return signals for each of the plurality of ultrasound signals and recording the return signals as signal traces;
   rectifying each of the signal traces to produce a plurality of rectified traces;
   identifying, at each time sample, a minimum value across all of the plurality of rectified traces;
   deriving, for each of the plurality of rectified traces, a difference between a value at each time sample and the minimum value at each time sample;
   where the difference exceeds a threshold in any of the rectified traces, marking the value for that time sample in that rectified trace as interference.

2. The method of claim 1, wherein the threshold is a constant value at all time samples.

3. The method of claim 1, wherein the threshold is adaptive, and is determined by multiplying the minimum value at the time sample by a defined factor.

4. The method of any preceding claim, wherein the step of rectifying each of the signal traces comprises performing envelope detection on each of the signal traces.

5. The method of any preceding claim, wherein the ultrasound transducer is a phased array ultrasound transducer comprising a plurality of elements, wherein each element of the ultrasound transducer sequentially transmits a plurality of ultrasound signals separated by a pulse repetition period; and wherein each of the plurality of elements detects in parallel a set of return signals corresponding to each transmitted signal.

6. A method for suppressing electromagnetic interference in ultrasound imaging of a substrate comprising the method of detecting electromagnetic interference of claims 1 to 4, and further comprising the steps of:

   rejecting the values identified as interference in each rectified trace;
   averaging, for each time sample, any remaining values from each rectified trace to give average values; and
   forming a processed trace from the average values.

7. The method of claim 6, wherein the step of forming a processed trace from the average values comprises taking an average of values in the (unrectified) signal traces corresponding to the remaining values at the same time samples in each rectified trace, and forming an unrectified processed trace from the average values in the (unrectified) signal traces.

8. A method for suppressing electromagnetic interference in ultrasound imaging of a substrate comprising the method of detecting electromagnetic interference of claims 1 to 4, and further comprising the steps of:

   rejecting the values identified as interference in each rectified trace;
   taking a minimum value from any remaining values at each time sample; and
   forming a processed trace from the minimum values.

9. A method for suppressing electromagnetic interference in ultrasound imaging of a substrate comprising the method of detecting electromagnetic interference of claim 5, wherein the method further comprises the steps of:

   selecting one set of return signals as a representative signal set, wherein the steps of rectifying each of the signal traces; identifying the minimum values at each time sample; deriving the difference between the values and the minimum value at each time sample and marking the value at time samples as interference where the difference exceeds a threshold are performed on the representative signal set; and
   marking values in the other sets of return signals as interference which correspond to the same time as the time samples marked as interference in the representative signal set.

10. The method of claim 9, further comprising the steps of:

rejecting the values marked as interference in each return signal; and

forming a processed signal trace by combining any remaining values at each time sample that have not been marked as interference.

**11.** The method of claim 10, wherein the return signals and processed signal trace are unrectified.

**12.** The method of any preceding claim, wherein the pulse repetition rate is selected to minimise aliasing patterns.

**FIG. 1A**

EP 4 675 272 A2

FIG. 1B

100'
100

Hotter
(Slower)
102

104

106
Colder
(Faster)

100

100^def

**FIG. 2A**

(a) Share wave propagation through homogeneous plate at 25 °C

(b) Share wave propagation through homogeneous plate at 150 °C

(c) Share wave propagation with thermal distribution considered

**FIG. 2B**

FIG. 3A

FIG. 3B

EP 4 675 272 A2

**FIG. 4**

Modelling

Perform thermal model on weld geometry to generate a temperature map

Collect real thermal data whilst welding

Matches model? — No → Update model

Yes

Ray Tracing

Convert map to acoustic speed map

Use contours to segment into speed zones

Ray trace for each Beam, using refraction at each speed boundary, and derive transit time through each zone

Adjust map

Spot temp check OK? — Yes

No

Imaging

Generate Region of Interest (Display Window)

Generate look-up table for each pixel of weighting function for the 4 closest samples (2 from each of nearest beams)

Acquisition, imaging & streaming loop

Acquire data for all beams and generate image using look-up table for each pixel

Correct geometry? — Yes

No

FIG. 5

FIG. 6

**FIG. 7**

EP 4 675 272 A2

FIG. 8

FIG. 9A

FIG. 9B

FIG. 9C

FIG. 9D

**FIG. 10A**

**FIG. 10B**

FIG. 11

**FIG. 12**

Setup Scan Sequence to do multiple transmissions (Multiple Tx) — 1300

Adjust Tx Pulse Repetition Rate to break aliasing patterns — 1302

Acquire data — 1304

Does interference occurs across all parallel receive (Rx) channels? — 1306

No, then — 1308

Process the group of streams from each Tx for each beam in turn — 1310

Perform Rectification (Envelope Detection) — 1312

Find Minimum (& Maximum) value over each Tx for each sample — 1314

Compare with a threshold value — 1316

If above the threshold, use the Minimum sample value — 1322

Build the rectified stream, selecting Minimum value for each sample — 1324

Use same selector to build the RF stream from the raw RF streams — 1326

Result reached — 1320

If below the threshold, then use the average over the samples from each Tx stream — 1318

Result reached — 1320

Yes, then — 1328

Only one of the parallel channels needs to analysed — 1330

This channel is rectified and analysed as for Standard Imaging — 1332

Perform Rectification (Envelope Detection) — 1334

Find Minimum (& Maximum) value over each Tx for each sample — 1336

The sample selector can be used to select the appropriate Tx stream for all parallel Rx Channels — 1338

Result reached — 1320

**FIG. 13**

Interference seen on A-scan (Scope display), B-scan (Image) and C-scans (Amplitude and time-of-Flight Maps)

FIG. 14

The Amp & ToF C-scan maps show intereference, especially along the central band where there is no steering, as the interference on all channels adds constructively

EP 4 675 272 A2

Improvement to interference seen on all A-scan, B-scan and C-scans displays

**FIG. 15**

EP 4 675 272 A2

EP 4 675 272 A2

FIG. 16

56

Welding Process

Process Monitoring

Sensor Data (Laser, Vision, Acoustic)

Historic Data

Storage

Data Conditioning

Data Reduction, Machine Learning

Live analysis

Analysis Results

Thresholding

Defect Indicators

Weld Quality Results

Weld Qualification

User Interface

Inputs

User Display

Post Weld Hot NDT

High temp PAUT Probe

NDT indications

Defect indicators

**FIG. 17**

FIG. 18A

FIG. 18B

FIG. 19

Sensor matrix

Light
source

Receiver

Measuring range
y-axis (profile height)

Measuring range
x-axis (profile width)

**FIG. 20A**

FIG. 20B

FIG. 21

FIG. 22

EP 4 675 272 A2

FIG. 23

FIG. 24